# EUROPÄISCHE PATENTSCHRIFT

(11) **EP 3 678 810 B1**
(45) Veröffentlichungstag und Bekanntmachung des Hinweises auf die Patenterteilung: **07.06.2023**
(21) Anmeldenummer: 18768841.1
(22) Anmeldetag: 07.09.2018
(51) Int. Cl.: G02B 7/02, G02B 7/08, G02B 7/14, G02B 7/16, G02B 7/18, G02B 27/00, G02B 27/14, B22F 12/44, B22F 12/90, B33Y 30/00, B33Y 40/00, B23K 26/06, B23K 26/12, B23K 26/14, B23K 26/144, B23K 26/342, B23K 26/70, B22F 10/28, B22F 12/53, B22F 12/70, B22F 12/42

(54) **OPTIKMODUL MIT VORRICHTUNG ZUM AUTOMATISCHEN WECHSELN EINER KOLLIMATIONSOPTIK**
OPTICAL MODULE HAVING A DEVICE FOR AUTOMATICALLY CHANGING A COLLIMATION OPTIC
MODULE OPTIQUE MUNI D'UN DISPOSITIF PERMETTANT DE CHANGER AUTOMATIQUEMENT UNE OPTIQUE DE COLLIMATION

(30) Priorität: 07.09.2017 DE 102017215839
(43) Veröffentlichungstag der Anmeldung: 15.07.2020
(73) Patentinhaber: DMG MORI Ultrasonic Lasertec GmbH, 55758 Stipshausen (DE)
(72) Erfinder: STÜRMER, Udo, 87459 Pfronten (DE); ABT, Andreas, 87466 Oy-Mittelberg (DE)
(74) Vertreter: MERH-IP Matias Erny Reichl Hoffmann Patentanwälte PartG mbB
(86) Internationale Anmeldenummer: PCT/EP2018/074131
(87) Internationale Veröffentlichungsnummer: WO 2019/048608

(56) Entgegenhaltungen:
- EP-A1- 2 062 676
- EP-A1- 2 399 703
- EP-A1- 2 711 121
- EP-A1- 3 127 685
- DE-A1-102009 046 485
- DE-A1-102014 209 308
- DE-B3-102008 048 323
- JP-A- 2005 193 249
- US-A1- 2010 135 356

## Beschreibung

Die vorliegende Erfindung betrifft ein Optikmodul für eine Maschine zum Bearbeiten von Werkstücken und/oder zum Herstellen von Formkörpern durch ortsselektives Verfestigen von Werkstoffpulver zu zusammenhängenden Bereichen mittels eines Laserstrahls. Die Erfindung bezieht sich insbesondere auf ein Optikmodul für eine Maschine zum Herstellen von Formkörpern nach dem Prinzip des selektiven Laserschmelzens, des selektiven Lasersinterns oder des Laserauftragsschweißens. Dabei können insbesondere Werkstoffpulver aus Metall, Plastik oder Keramik verwendet werden. Darüber hinaus kann das erfindungsgemäße Optikmodul beispielsweise auch in einer Maschine zum Laserschweißen, Laserbohren, Laserhärten oder Laserschneiden verwendet werden. Zusammenfassend für die verschiedenen Arten von Maschinen zum Bearbeiten/Fertigen/Herstellen eines Werkstücks beziehungsweise eines Formkörpers mit einem Laserstrahl wird im Folgenden der Begriff Laser-Werkzeugmaschine oder auch einfach Maschine verwendet.

### Hintergrund

Mit dem Verfahren des selektiven Laserschmelzens, Lasersinterns oder Laserauftragsschweißens können Formkörper, wie etwa Maschinenteile, Werkzeuge, Prothesen, Schmuckstücke usw. gemäß Geometriebeschreibungsdaten der entsprechenden Formkörper, beispielsweise durch schichtweises Aufbauen aus einem metallischen oder keramischen Werkstoffpulver beziehungsweise aus einem Kunststoffpulver hergestellt beziehungsweise bearbeitet werden. Beim Herstellungsprozess wird das Werkstoffpulver durch einen fokussierten Laserstrahl in einem vorgegebenen Bereich, der einem ausgewählten Querschnittsbereich des Modells des Formkörpers entspricht, erhitzt, so dass das Werkstoffpulver in den bestrahlten Bereichen zu zusammenhängend verfestigten Abschnitten umgeschmolzen wird. Ein Schutzgas kann dabei eine Oxidation während des Aufbauprozesses verhindern. Nach dem Erkalten entsteht eine Werkstoffschicht, die mechanisch bearbeitet werden kann.

Zum Stand der Technik betreffend das Gebiet des selektiven Laserschmelzens wird zum Beispiel auf die DE 10 2015 222 689 A1 verwiesen. Ferner ist eine Laser-Werkzeugmaschine der eingangs genannten Art zum Beispiel aus der EP 2 052 845 A2 bekannt. Eine Werkzeugmaschine zum Auftragsschweißen wird beispielsweise in der Offenlegungsschrift DE 10 2013 224 649 A1 beschrieben. In der deutschen Offenlegungsschrift DE 196 30 147 A1 wird ein Anschlusskopf zum Bearbeiten eines Werkstücks mittels eines Laserstrahls beschrieben, der einen automatischen Fokussierlinsen-Wechselmechanismus aufweist, der als Revolver ausgebildet ist.

Die EP 2 711121 A1 offenbart eine Laserbearbeitungsmaschine mit einer Vielzahl von Kollimatorlinsen, um einen Laserstrahl von einem Laseroszillator, der aus einem Austrittspunkt einer optischen Übertragungsfaser ausgetreten ist, in parallele Lichtstrahlen umzuwandeln, eine Kollimatorlinse, um den Laserstrahl zu bündeln und ihn dann auf ein Werkstück abzustrahlen, und eine Düse, die auf einer Seite des Werkstücks entfernt von der Kollimatorlinse angeordnet ist. Die Kollimationslinsen sind im Abstand voneinander in einer Richtung parallel zu einer optischen Achse angeordnet. Eine Schaltvorrichtung schaltet die Position jeder der Kollimationslinse in der orthogonalen Richtung um, so dass der Mittelpunkt einer der Kollimationslinsen auf einen Mittelpunkt des Laserstrahls ausgerichtet werden kann. Die Kollimationslinsen haben entsprechende Brennweiten, die sich voneinander unterscheiden.

Die deutsche Patentanmeldung DE 10 2014 209 308 A1 beschreibt einen Laserbearbeitungskopf, der ein Linsenwechselsystem mit zwei Linsen unterschiedlicher Brennweite aufweist, wobei mittels des Linsenwechselsystems jeweils eine der Linsen in den Strahlengang eines Laserstrahls im Laserbearbeitungskopf gebracht werden kann, wobei die Linsen an einem gemeinsamen Rahmen gehalten sind, der um eine Drehachse schwenkbar ist, und wobei die Drehachse senkrecht zu einer Richtung einer Laserstrahlachse des Laserstrahls verläuft.

Der Artikel "Laser-Einheit macht Auftragsschweißen auf Bearbeitungszentrum möglich" von Nowotny et al. in "MM Das Industriemagazin", 17/2009, Seite 42 ff., beschreibt eine Laserbearbeitungsoptik, die über einen Steilkegel in die Frässpindel einer CNC-Maschine eingesetzt wird. In den Laser-Brennpunkt wird Schweißgut (Werkstoffpulver) durch eine Pulverdüse zugeführt. In der gleichen Maschine kann das Werkstück gefräst werden.

In der Patentanmeldung US 2017/0136578 A1 wird eine Maschine zum schichtweisen Aufbau eines dreidimensionalen Formkörpers durch Schmelzen eines Werkstoffpulvers beschrieben. Das Werkstoffpulver wird mittels einer an einem Laserbearbeitungskopf befestigten Pulverdüse an einen Arbeitspunkt geleitet, wo es von einem Laserstrahl, der durch die Pulverdüse geführt wird, geschmolzen wird. Die Maschine weist eine Pulverdüsenwechseleinheit auf, welche die am Laserbearbeitungskopf befestigte Pulverdüse austauscht.

Aus der europäischen Patentanmeldung EP 2 062 679 A1 ist ein Bearbeitungskopf für eine Laserbearbeitungsmaschine bekannt, der einen stationären Teil in Form eines seitlich offenen Gehäuses aufweist, welches einen Raum für ein Wechsel-Modul umschließt, das als Ganzes vom stationären Teil des Bearbeitungskopfes getrennt werden kann, ohne dass der stationäre Teil in Einzelteile zerlegt werden muss. Das Wechselmodul umfasst eine Fokussierungsoptik, die koaxial zum Laserstrahl bewegbar ist, und eine Messeinrichtung zum Bestimmen der Position der Fokussierungsoptik.

Die US Patentanmeldung US 2010/135356 A1 offenbart eine Vorrichtung zum Überwachen einer Temperatur und/oder eines temperaturabhängigen Parameters eines in einem Strahlengang eines Laserstrahls angeordneten optischen Elements. Die Vorrichtung umfasst eine Messlichtquelle, um Messstrahlung zu erzeugen und die Messstrahlung auf das optische Element zu richten, einen Detektor, der angeordnet ist, um einen Teil der Messstrahlung, der einen Durchgangsbereich des optischen Elements passiert hat, eine mit dem Detektor verbundene Auswerteeinrichtung zur Überwachung der Temperatur und/oder des temperaturabhängigen Parameters. Die Auswerteeinrichtung ist dazu ausgebildet, die Temperatur und/oder den temperaturabhängigen Parameter basierend auf einer Intensität der von dem Detektor erfassten Messstrahlung im Durchgangsbereich zu bestimmen.

Eine Laser-Werkzeugmaschine wird üblicherweise mit einem Laser betrieben, der einen Laserstrahl mit einer Ausgangsleistung von mehreren hundert bis zu mehreren tausend Watt bereitstellt, die meist im Dauerbetrieb ("Continuous Wave", CW) betrieben werden. Entscheidend für den Bearbeitungsprozess kann insbesondere der Energieübertrag vom Laserstrahl auf das Werkstoffpulver sein. Dieser wird einerseits durch das Absorptionsvermögen des Werkstoffpulvers und andererseits von der Intensität des Laserstrahls beeinflusst. Neben der absoluten Laserleistung bestimmt also der Strahldurchmesser den Schmelzprozess. Der Strahldurchmesser des Laserstrahls wird üblicherweise durch die Brennweite einer Fokussieroptik sowie durch den Strahldurchmesser des kollimierten Laserstrahls vor der Fokussieroptik bestimmt. Der Strahldurchmesser des kollimierten Laserstrahls kann insbesondere durch die Brennweite einer Kollimationsoptik festgelegt werden. Somit kann der Strahldurchmesser des fokussierten Laserstrahls, beziehungsweise die Taille eines gaußschen Laserstrahls, durch geeignete Wahl der Kollimationsoptik angepasst werden, ohne die Brennweite der Fokussieroptik zu verändern.

Gemäß dem Stand der Technik sind im Wesentlichen zwei Typen von Maschinen zum Bearbeiten von Werkstücken und/oder zum Herstellen von Formkörpern durch ortsselektives Verfestigen von Werkstoffpulver zu zusammenhängenden Bereichen mittels eines Laserstrahls, insbesondere durch selektives Laserschmelzen beziehungsweise selektives Lasersintern, bekannt. Die Maschinentypen unterscheiden sich unter Anderem hinsichtlich der Art und Weise, wie das Werkstoffpulver bereitgestellt wird. Bei einem ersten Maschinentyp wird ein Pulverbett schichtweise aufgebaut. Bei einem zweiten Maschinentyp wird das Werkstoffpulver mittels einer Pulverdüse am Ort der Bearbeitung bereitgestellt. Die vorliegende Erfindung betrifft insbesondere Maschinen, bei denen der Laserstrahl mittels eines Laserbearbeitungskopfes bereitgestellt wird. Der mechanische Aufbau zum Bewegen des Laserbearbeitungskopfes und/oder des Werkstücks kann beispielsweise wie bei einem bekannten Fünf-Achsen-Bearbeitungszentrum erfolgen, wobei statt einem mechanischen Werkzeug der Laserbearbeitungskopf vorgesehen ist. Seit einigen Jahren sind auf dem Markt auch Werkzeugmaschinen verfügbar, die sowohl eine Laserbearbeitung als auch eine spanende Bearbeitung, zum Beispiel mit einem Fräswerkzeug, erlauben. Bei solchen Hybrid-Bearbeitungszentren kann der Laserbearbeitungskopf an der Aufnahme der Werkzugspindel befestigt werden.

Der Laserbearbeitungskopf kann eine Vielzahl optischer Komponenten zum Manipulieren des Laserstrahls umfassen, wie zum Beispiel zum Kollimieren, Fokussieren, Umlenken, Überwachen, Schalten und/oder Modulieren des Laserstrahls beziehungsweise der Leistung des Laserstrahls. Es hat sich als vorteilhaft erwiesen, möglichst viele Optikkomponenten in einem als austauschbares Bauteil vormontierten Optikmodul zusammenzufassen, das über geeignete Mittel lösbar an der Maschine, insbesondere an einer Stellachse der Maschine, befestigt werden kann. Hierdurch kann die Wartung einer Laser-Werkzeugmaschine vereinfacht und beschleunigt werden, so dass die Maschine effizienter genutzt werden kann, da eine Leerlaufzeit der Maschine verkürzt werden kann.

### Zusammenfassung

Der vorliegenden Erfindung liegt die Aufgabe zugrunde, ein Optikmodul bereitzustellen, das einerseits schnell und auf einfache Weise ausgetauscht werden kann, und andererseits ermöglicht, die Intensität eines Laserstrahls zum Bearbeiten eines Werkstücks beziehungsweise zum Herstellen eines Formkörpers gemäß den jeweiligen Anforderungen anzupassen.

Gelöst wird die Aufgabe durch ein Optikmodul gemäß dem anhängigen Anspruch 1.

Insbesondere kann die Kollimationsoptik während eines Bearbeitungsprozesses automatisch gewechselt werden, so dass der Durchmesser des Laserstrahls am Arbeitspunkt und entsprechend die Intensität des Laserstrahls am Arbeitspunkt während des Bearbeitungsprozesses automatisch einstellbar sind. Dadurch, dass der Kollimationsoptikwechsler einen Mechanismus zum automatischen Wechseln der Kollimationsoptik aufweist, kann der Wechsel der Kollimationsoptik in den Bearbeitungsprozess integriert werden, ohne dass ein manuell durchzuführender Schritt notwendig ist. Der Arbeitspunkt des Laserstrahls entspricht in der Regel dem Brennpunkt des fokussierten Laserstrahls. Die mindestens zwei Kollimationsoptiken können jeweils mindestens eine Kollimationslinse umfassen. Die Kollimationsoptik kann auch eine Vielzahl von Linsen umfassen. Bei einer Kollimationsoptik mit einer Kombination mehrerer Linsen können Abbildungsfehler, beispielsweise aufgrund von sphärischer Aberration und/oder Astigmatismus, ausgeglichen werden.

Die Kollimationsoptik dient zum Kollimieren eines divergent in das Optikmodul eingekoppelten Laserstrahls. Beispielsweise kann der Laserstrahl mittels einer optischen Faser in das Optikmodul eingekoppelt werden. Das Optikmodul kann demnach Mittel zum Anschließen einer optischen Faser, insbesondere einen Faserkoppler, aufweisen. Da eine optische Faser Laserlicht über viele Meter transportieren kann, ist es möglich, den Laser an einem geschützten von der Prozesskammer entfernten Ort zu platzieren. Der Abstand zwischen Kollimationsoptik und Ende der optischen Faser entspricht ungefähr der Brennweite der Kollimationsoptik. Der kollimierte Laserstrahl kann durch eine am Optikmodul befestigte Fokussieroptik auf einen Brennpunkt fokussiert werden. Der Laserstrahl verlässt das Optikmodul somit als fokussierter Strahl. Die Fokussieroptik kann mindestens eine Fokussierlinse umfassen. Die Fokussieroptik kann auch eine Vielzahl von Linsen umfassen. Bei einer Fokussieroptik mit einer Kombination mehrerer Linsen können Abbildungsfehler, beispielsweise aufgrund von sphärischer Aberration und/oder Astigmatismus, ausgeglichen werden.

Optikkomponenten von Laser-Werkzeugmaschinen können zum einen durch die relativ hohen Laserleistungen einem erhöhten Verschleiß unterliegen. Andererseits kann es insbesondere bei einer Hybridmaschine, die sowohl Laserbearbeitung als auch spanende Fertigungsverfahren durchführen kann, zu einer Verschmutzung von Optikkomponenten, zum Beispiel durch Kühlmittel, Staub, Späne und sonstige Partikel kommen. Ferner kann das Werkstoffpulver zu einer Verschmutzung von Optikkomponenten beitragen. Auf einer Optikkomponente abgelagerte Schmutzpartikel können insbesondere bei hohen Laserleistungen zu einer hohen Wärmeeinwirkung auf die Optikkomponente und somit zu deren Beschädigung führen. Daher ist es wünschenswert, wenn Optikkomponenten bei Beschädigung oder Verschmutzung schnell und einfach ausgetauscht werden können. Dies wird einerseits dadurch erreicht, dass das gesamte Optikmodul als vormontierte Baugruppe lösbar an einer Stellachse befestigt werden kann und somit leicht austauschbar ist. Andererseits ermöglichen austauschbare Optikkomponenten einen schnellen Wechsel ohne Ausbau des gesamten Optikmoduls. So ermöglicht beispielsweise der Kollimationsoptikwechsler einen schnellen automatischen Wechsel der Kollimationsoptik, ohne dass ein Austausch des gesamten Kollimationswechslers beziehungsweise des Optikmoduls nötig ist.

Die im Optikmodul angeordneten Optikkomponenten können jeweils lösbar im oder am Gehäuse des Optikmoduls befestigt sein. Somit kann einerseits während des Betriebs der Maschine ein automatischer Wechsel der Optikkomponenten stattfinden. Andererseits kann ein zu wartendes Optikmodul durch ein Austauschen einzelner Optikkomponenten wieder in einen betriebsfähigen Zustand gebracht werden. Beispielsweise kann der Kollimationswechsler als austauschbares Modul lösbar im Gehäuse des Optikmoduls angeordnet sein und somit bei einer Wartung des Optikmoduls ausgetauscht werden.

Vorteilhafte Aus- und Weiterbildungen, welche einzeln oder in Kombination miteinander eingesetzt werden können, sind Gegenstand der abhängigen Ansprüche.

Der Kollimationsoptikwechsler weist einen Revolver mit mindestens zwei Kollimationsoptiken auf. Die Kollimationsoptiken können dabei um eine gemeinsame angetriebene Drehachse des Revolvers angeordnet sein, so dass durch Drehen des Revolvers ein automatischer Linsenwechsel erfolgen kann. Der Antrieb des Kollimationsoptikwechslers bewirkt eine Drehung der Kollimationsoptiken um die gemeinsame Drehachse des Revolvers. Hierdurch lässt sich in vorteilhafter Weise ein kompakter Kollimationsoptikwechsler mit einer Vielzahl von Kollimationsoptiken realisieren. Insbesondere sind die Kollimationsoptiken derart angeordnet, dass ihre Symmetrieachse jeweils parallel zur angetriebenen Drehachse des Revolvers ausgerichtet ist. Ferner sind die Kollimationsoptiken in Abhängigkeit ihrer Brennweite an einer entsprechenden Position entlang der Richtung des Laserstrahls angeordnet, so dass sie einen divergierenden Laserstrahl kollimieren. Insbesondere entspricht der geeignete Abstand der Kollimationsoptik zu einem Faserkoppler in etwa der Brennweite der Kollimationsoptik. Alternativ zu einem Revolver kann der Kollimationsoptikwechsler ein Verschiebesystem mit angetriebenen Schlitten aufweisen, wobei die Kollimationsoptiken entsprechend ihrer Brennweite in parallelen Ebenen angeordnet sind und durch Verschieben in den Strahlengang des Laserstrahls hineinbewegt beziehungsweise aus dem Strahlengang des Laserstrahls herausbewegt werden können. Auf diese Weise kann ebenfalls ein kompakter Kollimationsoptikwechsler mit einer Vielzahl von Kollimationsoptiken realisiert werden. Diese Ausführungsform ist aber nicht Teil der gegenwärtigen Erfindung gemäß Anspruch 1**.**

Erfindungsgemäß weist der Kollimationsoptikwechsler Mittel zum Kühlen der Kollimationsoptiken auf. Durch das Kühlen der Kollimationsoptiken, kann eine Beschädigung der Linsen durch einen Wärmeübertrag vom Laserstrahl auf die Linsen weitestgehend vermieden werden. Somit kann durch die Kühlung die Lebensdauer der Linsen erhöht werden. Ferner kann die Erwärmung einer Linse zu einer Veränderung der Linsenform führen, welche einen Einfluss auf die Brennweite der Linse haben kann. Durch das Kühlen der Linsen können solche Effekte verringert werden. Insbesondere kann der Effekt der thermischen Linse verringert werden.

Erfindungsgemäß weist der Kollimationsoptikwechsler Mittel zum Messen der Temperatur der Kollimationsoptiken auf. Die Messung der Temperatur kann insbesondere über einen Temperaturmessfühler wie zum Beispiel einen NTC-Widerstand erfolgen, der einen Messwert an eine Maschinensteuerung ausgeben kann. Zusammen mit dem Mittel zum Kühlen der Kollimationsoptiken kann die Temperatur der Kollimationsoptiken auf einen Sollwert geregelt werden. Wenn die Kollimationsoptiken bei einer vorgegebenen Temperatur betrieben werden, kann ein Einfluss der Temperatur auf die optischen Eigenschaften der Linsen zumindest konstant gehalten werden.

Das Optikmodul weist vorzugsweise Mittel zum Befestigen eines automatisch austauschbaren Fokussiermoduls auf. Das Fokussiermodul kann beispielsweise über mindestens zwei Spannbolzen mit dem Optikmodul verbunden werden. Das Optikmodul kann entsprechende Aufnahmen für die Spannbolzen aufweisen. Die Aufnahmen können insbesondere als elektromagnetisch, hydraulisch oder pneumatisch betätigbare oder über eine Feder gespannte Spannmechanismen ausgeführt sein. Das Optikmodul kann ferner Mittel zum Überwachen der Temperatur der Fokussieroptik oder eines Schutzglases der Fokussieroptik aufweisen. Durch das Vorsehen von Mitteln zum Befestigen eines automatisch austauschbaren Fokussiermoduls kann ein automatischer Wechsel der Fokussieroptik erfolgen. Diese kann dann ähnlich wie ein Werkzeug eines Bearbeitungszentrums während des Fertigungs- beziehungsweise Bearbeitungsprozesses vollautomatisch ausgetauscht werden. Durch das automatisierte Wechseln von Fokussieroptik und Kollimationsoptik kann der Strahldurchmesser des Laserstrahls im Fokus je nach Anforderung innerhalb eines großen Bereichs eingestellt werden. Die Spannbolzen erlauben ein schnelles und sicheres Befestigen des Fokussiermoduls am Optikmodul. Ferner sorgen die Spannbolzen dafür, dass das Fokussiermodul mit einer hohen Positionsgenauigkeit am Optikmodul befestigt werden kann.

Ein Fokussiermodul umfasst vorzugsweise einen im Wesentlichen zylindrischen Träger mit kreisförmigen Querschnitt, der beispielsweise aus einem Metall oder einer Metalllegierung gefertigt ist. Im Träger ist eine Fokussieroptik angeordnet. Vorzugsweise kann die Fokussieroptik lösbar im Träger des Fokussiermoduls befestigt werden, so dass ein Austauschen der Fokussieroptik möglich ist. Die Brennweite der Fokussieroptik kann beispielsweise einige hundert Millimeter betragen. Bei der Fokussieroptik kann es sich um eine gebräuchliche Sammellinse oder um eine Kombination aus mehreren Linsen handeln. Das Fokussiermodul weist vorzugsweise Mittel zum Messen der Temperatur der Fokussieroptik auf. Weiter ist bevorzugt, dass das Fokussiermodul Mittel zum Kühlen der Fokussieroptik aufweist.

Das Fokussiermodul kann mindestens ein Schutzglas zum Schützen der Fokussieroptik vor Verschmutzung aufweisen. Das Schutzglas kann auch vor mechanischen Einwirkungen auf die Fokussieroptik schützen. Das Schutzglas ist vorzugsweise lösbar im Träger des Fokussiermoduls befestigt. Bei Verschmutzung kann das Schutzglas ausgetauscht werden. Vorzugsweise ist auf beiden Seiten der Fokussieroptik in axialer Richtung im Träger des Fokussiermoduls ein Schutzglas angeordnet, so dass die Fokussieroptik von beiden Seiten vor Verschmutzung geschützt ist. Das Fokussiermodul kann auch Mittel zum Messen der Temperatur des mindestens einen Schutzglases aufweisen. Somit kann eine Verschmutzung eines Schutzglases zum Beispiel durch einen Temperaturanstieg festgestellt werden.

Das Optikmodul kann ferner Mittel zum Befestigen einer automatisch austauschbaren Pulverdüse aufweisen. Die Pulverdüse kann beispielsweise über mindestens zwei Spannbolzen mit dem Optikmodul verbunden werden. Hierzu kann das Optikmodul entsprechende Aufnahmen für die Spannbolzen aufweisen. Die Aufnahmen können einen Spannmechanismus aufweisen, der insbesondere als hydraulisch oder pneumatisch betätigbarer oder über eine Feder gespannter Mechanismus ausgeführt sein kann. Die Spannbolzen erlauben ein schnelles und sicheres Befestigen der Pulverdüse am Optikmodul. Ferner sorgen die Spannbolzen dafür, dass die Pulverdüse mit einer hohen Positionsgenauigkeit am Optikmodul befestigt werden kann.

Die Pulverdüse kann einteilig oder mehrteilig aufgebaut sein. In einem mehrteiligen Aufbau kann die Pulverdüse einen Pulverdüsenflansch umfassen, an dem die Mittel zum Befestigen der Pulverdüse am Optikmodul, beispielsweise mindestens zwei Spannbolzen, angeordnet sind. Am Pulverdüsenflansch können zudem Schnittstellen zum Zuführen von Schutzgas, Trägergas, Kühlmittel und/oder Werkstoffpulver angeordnet sein. Der Pulverdüsenflansch kann vorzugsweise an einem mittleren Abschnitt, der als Trägerfür eine Pulverdüsenspitze ausgebildet ist, angeordnet sein. Die Pulverdüsenspitze kann lösbar am mittleren Abschnitt der Pulverdüse befestigbar sein, so dass ein Austauschen der Pulverdüsenspitze möglich ist.

Die Pulverdüse weist insbesondere im mittleren Abschnitt mindestens einen Kanal für Werkstoffpulver auf, um das Werkstoffpulver an den Brennpunkt des Lasers zu befördern. Vorzugsweise weist die Pulverdüse mindestens zwei oder drei oder vier oder mehr Werkstoffpulverkanäle auf, die auch verzweigt sein können, um das Werkstoffpulver möglichst gleichmäßig zum Laserbrennpunkt zu führen. Die Verzweigung der Werkstoffpulverkanäle beziehungsweise die koaxiale Führung des Werkstoffpulvers erfolgt insbesondere in einer Spitze der Pulverdüse. Die Pulverdüsenspitze kann hierzu einen Ringspalt aufweisen, der eine gleichmäßige Verteilung des Werkstoffpulvers entlang einer koaxial zum Laserstrahl ausgebildeten ringförmigen Öffnung bewirkt. Vorzugsweise wird das Werkstoffpulver von den Werkstoffpulverkanälen über eine Vielzahl von Öffnungen in den Ringspalt geleitet, um das Werkstoffpulvers möglichst gleichverteilt in den Ringspalt zu führen.

Die Kanäle für das Werkstoffpulver können auch zum Zuführen eines Schutz- beziehungsweise Trägergases verwendet werden. Das Schutzgas oder Prozessgas dient dazu, eine Reaktion des erhitzten Werkstoffpulvers mit Luftsauerstoff zu unterbinden. Ferner kann das Schutzgas als Trägergas den Transport des Werkstoffpulvers bewirken. Das Werkstoffpulver wird dann von der Strömung des Trägergases mitgeführt und durch die Werkstoffpulverkanäle zum Arbeitspunkt am Brennpunkt des Laserstrahls getragen. Als Schutz- beziehungsweise Trägergas eignen sich insbesondere inerte Gase wie zum Beispiel Argon. Je mehr Werkstoffpulverkanäle in der Pulverdüse vorgesehen sind, desto größer kann die Flussrate des Werkstoffpulvers sein. Um das Werkstoffpulver möglichst gleichmäßig zum Brennpunkt des Laserstrahls zu leiten, hat sich eine Konfiguration mit mindestens drei oder vier Werkstoffpulverkanälen als vorteilhaft erwiesen. Optional kann die Pulverdüse eine Vielzahl verschiedener Werkstoffpulverkanäle mit unterschiedlichen Durchmessern für unterschiedliche Pulverkörnungen aufweisen.

Das Optikmodul kann eine Vielzahl von Schnittstellen umfassen, um Werkstoffpulver von am Optikmodul angeordneten Leitungen für das Werkstoffpulver in die Werkstoffpulverkanäle der Pulverdüse zu leiten. Die Schnittstellen können beispielsweise als Einlassöffnungen an einem Flansch zum Befestigen der Pulverdüse ausgebildet sein. Die Einlassöffnungen können Dichtmittel zum gasdichten Abdichten beim Befestigen der Pulverdüse am Optikmodul umfassen. Die Einlassöffnungen können Mittel zum Ausrichten der Einlassöffnungen mit den Leitungen am Optikmodul aufweisen.

Die Pulverdüse kann Kühlkanäle für ein fluides Kühlmittel zum Kühlen der Pulverdüse aufweisen. Um der Pulverdüse das Kühlmittel zuzuführen kann das Optikmodul entsprechende Leitungen aufweisen. Vorzugsweise weist das Optikmodul mindestens einen Kühlmittelvorlauf und einen Kühlmittelrücklauf auf. Die Pulverdüse weist vorzugsweise mindestens zwei Kupplungen als lösbare Schnittstellen zwischen Kühlmittelvorlauf und Kühlmittelrücklauf des Optikmoduls und den Kühlmittelkanälen der Pulverdüse auf. Die Kupplungen können zum Beispiel als Schnellkupplungen ausgeführt sein, die mit entsprechenden Gegenstücken am Optikmodul verbunden werden können.

Durch das Vorsehen von Mitteln zum lösbaren Befestigen einer automatisch austauschbaren Pulverdüse kann ein automatischer Wechsel der Pulverdüse erfolgen. Diese kann dann wie ein Werkzeug eines Bearbeitungszentrums während des Fertigungs- beziehungsweise Bearbeitungsprozesses vollautomatisch ausgetauscht werden.

Das Optikmodul kann ferner eine Kamera zum Überwachen des Bearbeitungsprozesses aufweisen. Die Blickrichtung der Kamera kann beispielsweise mittels eines dichroitischen Spiegels mit dem Strahlengang des Lasers überlagert werden, so dass die Kamera entlang des Laserstrahls auf den Arbeitspunkt blicken und den Prozess überwachen kann. Der dichroitische Spiegel kann insbesondere gekühlt und temperaturüberwacht werden.

Der Strahlengang durch das Optikmodul ist vorzugsweise gasdicht verschlossen, so dass eine Sperrgasatmosphäre aufrechterhalten werden kann. Als Sperrgas können insbesondere inerte Gase wie zum Beispiel Stickstoff oder Argon verwendet werden. Wichtig ist vor allem, dass das Sperrgas frei von Partikeln ist, welche die Optikkomponenten verschmutzen können. Vorzugsweise ist das gesamte Gehäuse des Optikmoduls gasdicht verschlossen. Zum Aufbauen der Sperrgasatmosphäre im Gehäuse des Optikmoduls weist das Optikmodul vorzugsweise entsprechende Gaszuleitungen und/oder Mittel zum Anschließen von Zuführungen auf. Anstatt das Gehäuse gasdicht zu verschließen kann das Gehäuse auch derart aufgebaut sein, dass es möglich ist einen leichten Überdruck im Gehäuse durch Zuleiten des Sperrgases aufzubauen, so dass verhindert werden kann, dass Staub- oder Werkstoffpulverpartikel ins Innere des Optikmoduls gelangen.

Ein bevorzugtes Optikmodul weist Mittel zum Anschließen von Zuführungen für ein Prozessgas auf. Das Prozessgas kann ein Oxidieren des Werkstücks durch Reaktion mit Luftsauerstoff verhindern. Das Prozessgas kann auch als Trägergas zum Fördern des Werkstoffpulvers dienen. Das Optikmodul weist vorzugsweise Leitungen für das Prozessgas auf, um es über geeignete Schnittstellen mit Kanälen in einer Pulverdüse zum Brennpunkt des Laserstrahls (Arbeitspunkt) zu führen. Als geeignete Prozessgase können insbesondere inerte Gase, beispielsweise Argon oder Stickstoff verwendet werden. Insbesondere wird das Prozessgas über die Pulverdüse zum Arbeitspunkt geleitet.

Vorzugsweise weisen die Kollimationsoptiken jeweils mindestens ein Schutzglas zum Schützen der Kollimationsoptiken vor Verschmutzung auf. Das Schutzglas ist dabei im Strahlengang vor und/oder nach der Kollimationsoptik angeordnet. Um störende Reflexionen zurück in den Laser zu vermeiden kann das Schutzglas eine Antireflexionsbeschichtung aufweisen und/oder mit einem kleinen Winkel zur Strahlrichtung angeordnet sein. Bei Verschmutzung oder Beschädigung des Schutzglases kann dieses ausgebaut und ausgetauscht werden. Somit können die Kollimationsoptiken wirksam und auf einfache Weise vor Verschmutzung und Beschädigung geschützt werden.

In einer bevorzugten Ausführung des Optikmoduls weist der Kollimationsoptikwechsler mindestens drei, weiter bevorzugt mindestens vier oder mindestens fünf Kollimationsoptiken auf. Je mehr Kollimationsoptiken im Kollimationswechsler angeordnet sind, desto mehr verschiedene Brennweiten können vorgesehen sein, so dass mehr verschiedene Strahldurchmesser bereitgestellt werden können. Neben Kollimationsoptiken mit verschiedenen Brennweiten können auch mehrere identische Kollimationsoptiken vorgesehen sein, so dass bei Verschmutzung oder Beschädigung einer Kollimationsoptik beziehungsweise eines Schutzglases ein Austausch mit einer einsatzbereiten Kollimationsoptik erfolgen kann, ohne dass eine manuelle Wartung des Optikmoduls notwendig ist. Somit kann einerseits die Vielseitigkeit der Maschine erhöht werden und andererseits die Notwendigkeit von Wartungsarbeiten verringert werden. Als Kollimationsoptik kann beispielsweise eine Kollimationslinse, insbesondere eine Sammellinse, verwendet werden.

### Kurzbeschreibung der Figuren

Weitere vorteilhafte Ausgestaltungen werden nachfolgend anhand eines in den Zeichnungen dargestellten Ausführungsbeispiels, auf welches die Erfindung jedoch nicht beschränkt ist, näher beschrieben.

Es zeigen schematisch:
- **Figur 1:**: eine Werkzeugmaschine mit einem Optikmodul zum Herstellen bzw. Bearbeiten eines Formkörpers bzw. Werkstücks mittels Laserstrahlung.
- **Figur 2:**: eine perspektivische Schnittansicht eines Ausführungsbeispiels eines erfindungsgemäßen Optikmoduls.
- **Figur 3:**: eine weitere perspektivische Schnittansicht des in Fig. 2 gezeigten Ausführungsbeispiels des erfindungsgemäßen Optikmoduls.
- **Figur 4:**: eine perspektivische Schnittansicht eines oberen Bereichs des erfindungsgemäßen Optikmoduls gemäß dem Ausführungsbeispiel.
- **Figur 5:**: einen Längsschnitt eines erfindungsgemäßen Kollimationsoptikwechslers.
- **Figur 6:**: einen Querschnitt des erfindungsgemäßen Kollimationsoptikwechslers.
- **Figur 7:**: eine perspektivische Ansicht eines Ausführungsbeispiels einer Werkzeugmaschine zum Herstellen bzw. Bearbeiten eines Formkörpers bzw. Werkstücks mittels Laserstrahlung.
- **Figur 8:**: eine perspektivische Ansicht eines Werkzeugwechslers für eine Werkzeugmaschine zum Herstellen bzw. Bearbeiten eines Formkörpers bzw. Werkstücks mittels Laserstrahlung.
- **Figur 9:**: (A) eine teilgeschnittene perspektivische Ansicht und (B) eine perspektivische Ansicht einer austauschbaren Pulverdüse.
- **Figur 10**: eine Illustration des Wirkungsprinzips des Laserauftragsschweißens.
- **Figur 11**: (A) eine perspektivische Ansicht eines austauschbaren Fokussiermoduls, (B) und (C) jeweils Schnittansichten des austauschbaren Fokussiermoduls mit unterschiedlichen Brennweiten der Fokussieroptik.

### Ausführliche Beschreibung der Erfindung anhand eines Ausführungsbeispiels

Bei der nachfolgenden Beschreibung einer bevorzugten Ausführungsform der vorliegenden Erfindung bezeichnen gleiche Bezugszeichen gleiche oder vergleichbare Komponenten.

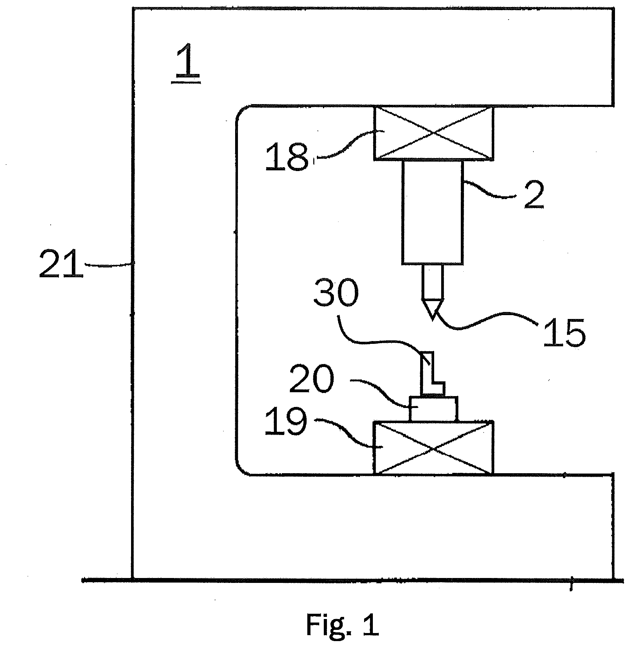

Fig. 1 zeigt eine schematische Darstellung einer Maschine 1 zum Bearbeiten eines Werkstücks 30 und/oder zum Herstellen eines Formkörpers 30 durch ortsselektives Verfestigen von Werkstoffpulver zu zusammenhängenden Bereichen mittels Laserstrahlung. Die Maschine 1 weist einen Maschinenrahmen 21 auf, an dem mittelbar über dazwischenliegende Stellachsen 18, 19 einerseits ein Werkstücktisch 20 und andererseits ein erfindungsgemäßes Optikmodul 2 angebracht sind. Die Stellachsen 18, 19 können jeweils mehrere translatorische (X, Y, Z) oder rotatorische (ϕ, λ, θ) Achsen aufweisen, die nach Maßgabe einer Maschinensteuerung einstellbar sind. Die Auslegung kann beispielsweise so sein, dass das Optikmodul 2 über ein, zwei oder drei translatorische Stellachsen 18 (X und/oder Y und/oder Z) am Maschinenrahmen 21 befestigt ist, während der Werkstücktisch 20 über eine, zwei oder drei rotatorische Stellachsen 19 am Maschinenrahmen 21 befestigt ist. Eine solche Laser-Werkzeugmaschine 1 weist in der Regel eine (nicht dargestellte) abgeschlossene Kabine auf, in der beispielsweise eine Schutzgasatmosphäre aufgebaut werden kann, und die den Arbeitsraum vor Verschmutzung abschirmt.

Auf dem Werkstücktisch 20 kann ein Werkstück 30 zum Bearbeiten lösbar befestigt werden. Alternativ kann auf dem Werkstücktisch 20 ein Formkörper 30 durch ortsselektives Verfestigen von Werkstoffpulver schichtweise aufgebaut werden.

Bei der Maschine 1 kann es sich beispielsweise um eine Fünf-Achsen-Laser-Werkzeugmaschine zum Herstellen von Formkörpern durch ortsselektives Verfestigen von Werkstoffpulver zu zusammenhängenden Bereichen mittels Laserstrahlung handeln. Das Optikmodul 2 ist hierbei lösbar an den Stellachsen 18 befestigt, so dass es bei Bedarf, zum Beispiel zur Wartung, schnell und einfach ausgetauscht werden kann. Bei einer solchen Fünf-Achsen-Laser-Werkzeugmaschine ist das Optikmodul 2 über drei translatorische Stellachsen 18 (X, Y und Z) am Maschinenrahmen 21 befestigt und der Werkstücktisch 20 ist über zwei Drehachsen am Maschinenrahmen angeordnet.

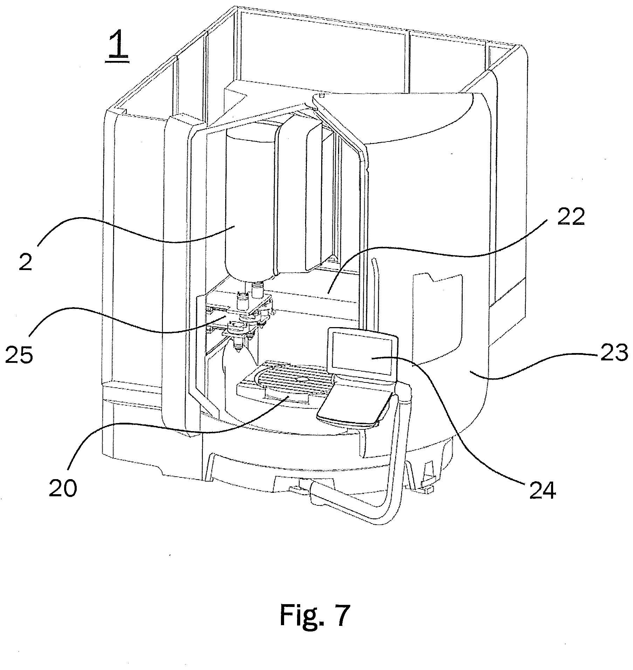

Eine beispielhafte Darstellung einer Fünf-Achsen-Laser-Werkzeugmaschine 1 zum Herstellen von Formkörpern durch ortsselektives Verfestigen von Werkstoffpulver zu zusammenhängenden Bereichen mittels Laserstrahlung ist in Fig. 7 gezeigt. Das dargestellte Ausführungsbeispiel entspricht im Wesentlichen der in Fig. 1 schematisch dargestellten Maschine 1. Der Werkstücktisch 20 und das Optikmodul 2 sind in einer im Wesentlichen durch eine Prozessraumtür 23 verschließbaren Prozesskammer 22 angeordnet. Ein außerhalb der Prozesskammer 22 angeordnetes Display 24 dient als Schnittstelle zwischen Benutzer und Maschinensteuerung. Auf diesem Display 24 können beispielsweise Messwerte und/oder Warnmeldungen und/oder Steuerungsapplikationen dargestellt werden.

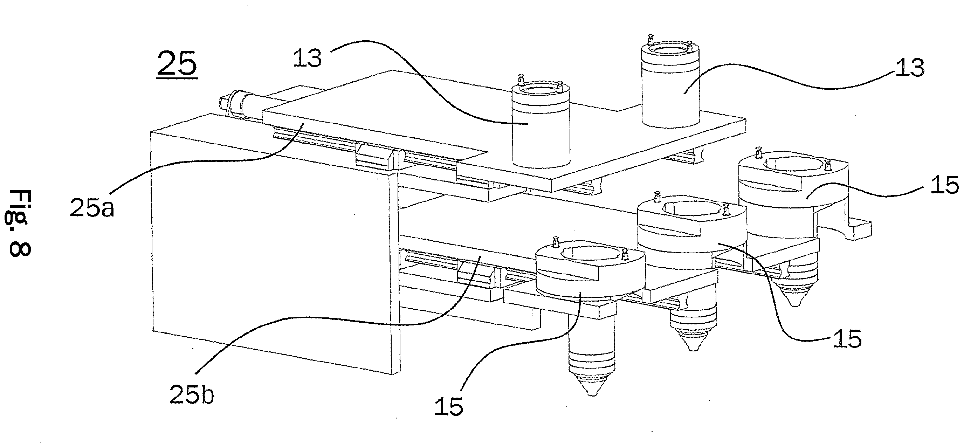

Die Werkzeugmaschine 1 umfasst einen Werkzeugwechsler 25, der mittels Stellachsen 25a, 25b seitlich in die Prozesskammer 22 hineingefahren werden kann. Eine Detailansicht des Werkzeugwechslers 25 ist in Fig. 8 dargestellt. Auf dem Werkzeugwechsler 25 kann eine Vielzahl von Fokussiermodulen 13 und eine Vielzahl von Pulverdüsen 15 angeordnet werden. Der in Fig. 8 dargestellte Werkzeugwechsler 25 weist drei Ablagepositionen für Pulverdüsen 15 mit unterschiedlicher axialer Länge auf. Der Werkzeugwechsler 25 weist ferner eine Ablagefläche für mindestens zwei Fokussiermodule 13 mit Fokussieroptiken 14 unterschiedlicher Brennweite auf. Mittels zweier Stellachsen 25a, 25b können die Fokussiermodule 13 beziehungsweise die Pulverdüsen 15 in die Prozesskammer 22 bewegt werden, so dass sie am Optikmodul 2 befestigt werden können. Ein Verfahren zum Wechseln der Pulverdüsen 15 beziehungsweise der Fokussiermodule 13 wird weiter unten beschrieben.

Der Werkzeugwechsler 25 kann mittels der Stellachsen 25a, 25b in eine mittels einer verschiebbaren Trennwand von der Prozesskammer 22 trennbare Werkzeugkammer verfahren werden. In der Werkzeugkammer sind die Fokussiermodule 13 und die Pulverdüsen 15 vor Verschmutzung beispielsweise durch Werkstoffpulver oder durch Schweißrauch geschützt, wenn eine Bearbeitung des Werkstücks in der Prozesskammer 22 durchgeführt wird.

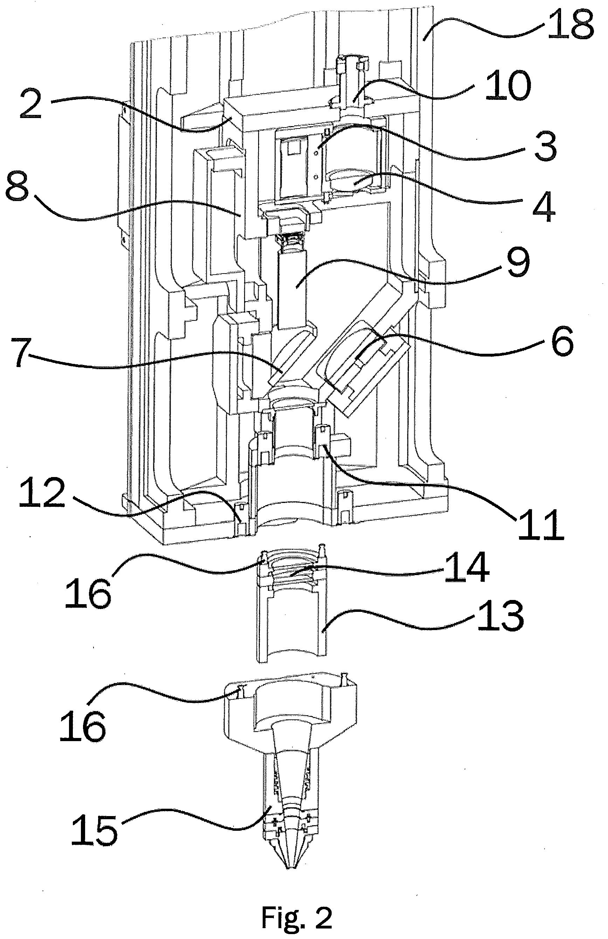

Fig. 2 zeigt ein Ausführungsbeispiel eines erfindungsgemäßen Optikmoduls 2, das auf einer Stellachse 18 lösbar montiert ist. Die Stellachse 18 ist beispielsweise eine in Z-Richtung verfahrbare Translationsachse, die auf zwei weiteren in X- und Y-Richtung verfahrbaren Translationsachsen angeordnet sein kann, so dass das Optikmodul 2 in allen drei Raumrichtungen verfahrbar ist. Das Optikmodul 2 ist insbesondere so an der Stellachse 18 montiert, dass der Laserstrahl senkrecht nach unten (parallel zur Richtung der Gravitation beziehungsweise in Z-Richtung) aus dem Optikmodul 2 austritt. Durch Verfahren der Stellachsen 18 kann somit ein Fokus des fokussierten Laserstrahls in drei Dimensionen im Raum verfahren werden, um ein Werkstück zu bearbeiten beziehungsweise um einen Formkörper schichtweise aufzubauen. Somit kann ein Formkörper wie bei einem 3D-Drucker durch Verschmelzen von Werkstoffpulver schichtweise aufgebaut werden.

Das Optikmodul 2 weist ein Gehäuse 8 auf, in dem eine Vielzahl von Optikkomponenten angeordnet ist. Das Gehäuse 8 dient einerseits als mechanische Plattform zum Anordnen der Optikkomponenten sowie zum Schützen der Optikkomponenten vor mechanischen Einflüssen. Im Gehäuse 8 kann eine Sperrgasatmosphäre aufgebaut werden. Durch einen Überdruck kann zum Beispiel das Eindringen von Partikeln und Dreck in das Gehäuse verhindert werden.

An einem oberen Bereich des Gehäuses 8 ist ein Faserkoppler 10 angeordnet, über den ein Laserstrahl aus einer optischen Faser eingekoppelt werden kann. Durch Verwenden einer optischen Faser kann Laserlicht von einer Laserstrahlquelle zuverlässig zum Optikmodul 2 geleitet werden. Die flexible optische Faser ermöglicht es das Optikmodul 2, und somit den Laserstrahl zu bewegen, ohne die Laserstrahlquelle selbst bewegen zu müssen. Ferner kann eine optische Faser einen Laserstrahl mit einem besonders gleichmäßigen Strahlprofil liefern.

Als Laserstrahlquelle kann beispielsweise ein Hochleistungs-Festkörperlaser verwendet werden. Hierzu gehören beispielsweise dotierte YAG-Laser. Insbesondere kann ein mit Ytterbium dotierter YAG-Scheibenlaser mit einer Wellenlänge von 1030 nm als Laserstrahlquelle dienen. Alternativ hierzu kann ein fasergeführter Diodenlaser mit einer Wellenlänge von 1020 nm als Strahlquelle verwendet werden. Diodenlaser können Laserstrahlen mit einer Leistung von einigen Watt bis zu mehreren Tausend Watt bereitstellen. Somit kann ausreichend Laserleistung für verschiedene Bearbeitungs- und Fertigungsprozesse bereitgestellt werden.

Direkt unterhalb des Faserkopplers 10 ist der Kollimationsoptikwechsler 3 im Gehäuse 8 des Optikmoduls 2 angeordnet. Eine Kollimationsoptik 4 mit einer ersten Brennweite von beispielsweise 80 mm ist derart im Kollimationsoptikwechsler 3 angeordnet, dass der aus der Faser austretende Laserstrahl auf einen Durchmesser von circa 36 mm kollimiert wird. Der Kollimationsoptikwechsler 3 kann weitere Kollimationsoptiken 4 mit Brennweiten von beispielsweise 50 mm, 60 mm und/oder 100 mm oder mehr aufweisen. Hiermit können kollimierte Laserstrahlen mit Durchmessern zwischen ca. 10 mm und 100 mm bereitgestellt werden. Als Kollimationsoptiken 4 können zum Beispiel geeignete Arten von Sammellinsen verwendet werden. Eine Kollimationsoptik 4 kann aus einer einzelnen Linse bestehen oder eine Vielzahl von Linsen umfassen. Material, Beschichtung und weitere Linseneigenschaften können in Abhängigkeit der verwendeten Laserwellenlänge und Laserleistung gewählt werden.

Der kollimierte Laserstrahl wird von zwei im Optikmodul 2 angeordneten Umlenkspiegeln 6, 7 auf eine Fokussieroptik 14 gerichtet, die den Laserstrahl fokussiert. Die Position beziehungsweise die Orientierung der Umlenkspiegel 6, 7 ist vorzugsweise jeweils einstellbar, so dass eine Justierung des Strahlengangs des Laserstrahls automatisch oder manuell vorgenommen werden kann. Die korrekte Justierung des Laserstrahls kann beispielsweise von der Kamera 9 überwacht werden. Insbesondere können die Umlenkspiegel 6, 7 gesteuert durch die Maschinensteuerung einstellbar sein. Hierzu können die Umlenkspiegel 6, 7 jeweils auf verstellbaren Haltern angeordnet sein, die mittels Steuersignalen über die Maschinensteuerung gesteuert werden können. Das Optikmodul 2 kann geeignete Schnittstellen aufweisen, um Signalleitungen für die Maschinensteuerung lösbar anzuschließen.

Die Brennweite der Fokussieroptik 14 kann beispielsweise zwischen 50 mm und 500 mm betragen. Die Fokussieroptik 14 ist vorzugsweise in einem automatisch wechselbaren Fokussiermodul 13 angeordnet, das über einen Befestigungsmechanismus 11, 16 am Optikmodul 2 befestigt werden kann. Somit kann durch Wechseln des Fokussiermoduls 13 auch die Brennweite der Fokussieroptik 14 vollautomatisch geändert werden.

Sieben beispielhafte Kombinationen von Brennweiten der Kollimationsoptik 4 und der Fokussieroptik 14 sind in Tabelle 1 dargestellt. Tabelle 1 listet beispielhaft auch resultierende Werte der Durchmesser des kollimierten Laserstrahls und des fokussierten Laserstrahls für einen Faserkerndurchmesser von 600 µm auf. Je kleiner der Strahldurchmesser, desto höher ist die Laserintensität. Insbesondere können mit einem kleineren Strahldurchmesser am Brennpunkt des Laserstrahls kleinere Strukturen hergestellt werden. Ein kleinerer Strahldurchmesser im Brennpunkt kann bei gleicher Brennweite der Fokussieroptik durch einen größeren Strahldurchmesser des kollimierten Laserstrahls vor der Fokussieroptik erreicht werden. Ein größerer Strahldurchmesser des kollimierten Laserstrahls hat den Vorteil, dass die Optikelemente im Optikmodul 2 einer geringeren Laserintensität ausgesetzt sind. Somit werden die Optikelemente mit geringerer Wahrscheinlichkeit beschädigt, da sie zum Beispiel weniger erwärmt werden.

**Tabelle 1: Sieben beispielhafte Kombinationen aus Kollimationsoptikbrennweite. und Fokussieroptikbrennweite:**

| Größe | Einheit | Bsp. 1 | Bsp. 2 | Bsp. 3 | Bsp. 4 | Bsp. 5 | Bsp. 8 | Bsp. 7 |
|---|---|---|---|---|---|---|---|---|
| Leistung | W | 4000 | 4000 | 4000 | 4000 | 4000 | 4000 | 4000 |
| Brennweite der Kollimationsoptik | mm | 50 | 60 | 80 | 100 | 60 | 80 | 100 |
| Durchmesser des kollimierten Strahls | mm | 22 | 27 | 36 | 45 | 27 | 36 | 45 |
| Brennweite der Fokussieroptik | mm | 300 | 300 | 300 | 300 | 200 | 200 | 200 |
| Durchmesser des fokussierten Strahls | mm | 3,6 | 3 | 2,3 | 1,8 | 2 | 1,5 | 1,2 |

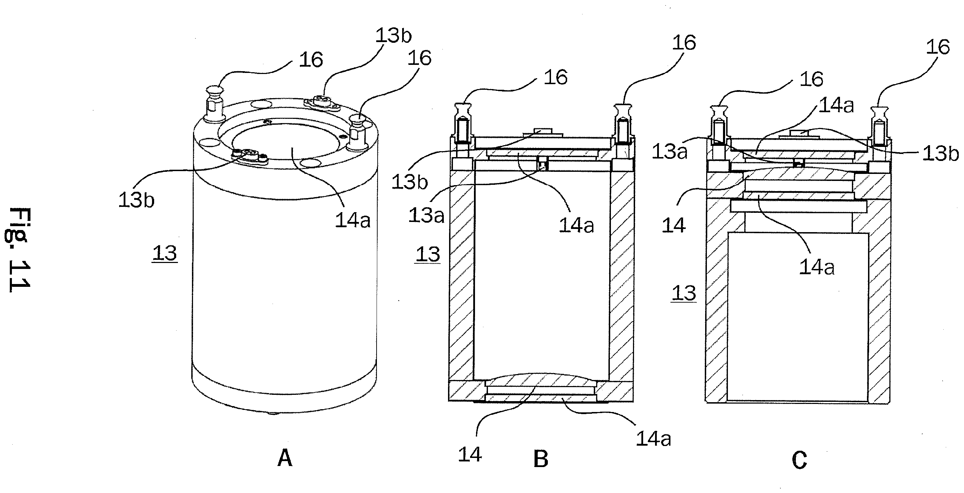

Eine beispielhafte Ausgestaltung des Fokussiermoduls 13 ist in Fig. 11A bis C dargestellt. Fig. 11A zeigt eine perspektivische Ansicht eines Fokussiermoduls 13 mit einem im Wesentlichen zylindrischen Trägergehäuse, das vorzugsweise aus einem Metall mit möglichst kleinem Wärmeausdehnungskoeffizient gefertigt ist. Entsprechend den Beispielen der Tabelle 1 zeigt Fig. 11B ein Fokussiermodul 13 mit einer Fokussieroptik 14, die eine Brennweite von 200 mm aufweist, und Fig. 11C ein Fokussiermodul 13 mit einer Fokussieroptik 14, die eine Brennweite von 300 mm aufweist. Die Fokussieroptiken 14 der unterschiedlichen Brennweiten sind so in den verschiedenen Fokussiermodulen 13 angeordnet, dass sich der resultierende Brennpunkt des Lasers stets am selben Ort befindet.

An einem oberen Rand des Fokussiermoduls 13 sind Befestigungsmittel, zum Beispiel zwei Spannbolzen 16 angeordnet. Die Befestigungsmittel 16 dienen auch dazu, eine möglichst hohe Positioniergenauigkeit von weniger als 1 mm sicherzustellen. Dies ist insbesondere auch für die genaue Strahlführung des Laserstrahls durch die Pulverdüse sowie an den korrekten Arbeitspunkt wichtig. Sollten dennoch Abweichungen auftreten, kann dies von der Kamera 9 detektiert und durch die Umlenkspiegel 6, 7 korrigiert werden. Das Fokussiermodul 13 weist mindestens ein Schutzglas 14a zum Schützen der Fokussieroptik 14 vor Verschmutzung oder Beschädigung auf. Vorzugsweise ist wie in den Schnittzeichnungen der Fig. 11B und C dargestellt auf beiden Seiten der Fokussieroptik 14 jeweils ein Schutzglas 14a im Fokussiermodul 13 angeordnet, um die Fokussieroptik 14 von beiden Seiten vor Verschmutzung oder mechanischer Einwirkung zu schützen.

Die Temperatur des mindestens einen Schutzglases 14a kann jeweils durch einen Messfühler 13a überwacht werden. In Fig. 11B und C wird nur die Temperatur des oberen Schutzglas 14a, das zuerst vom Laserstrahl getroffen wird, durch einen Messfühler 13a überwacht dargestellt. Als Messfühler kann beispielsweise ein temperaturabhängiger Widerstand (NTC-Widerstand) beziehungsweise ein Thermoelement verwendet werden. Das Thermoelement kann insbesondere ein Draht aus einer Platinlegierung sein. In ähnlicher Weise kann auch die Temperatur anderer optischer Komponenten im Optikmodul 2, insbesondere der Kollimationsoptiken 4, der Schutzgläser der Kollimationsoptiken 4, der Umlenkspiegel 6, 7 und/oder der Fokussieroptik 14 überwacht werden.

Ein vom Temperatur-Messfühler 14a erzeugtes analoges Messsignal wird über Schnittstellen 13b am Fokussiermodul 13 an Signalleitungen im Optikmodul 2 weitergeleitet. Von dort wird das Messsignal an eine Maschinensteuerung ausgegeben und in einen Temperaturwert umgerechnet, so dass die Temperatur einer optischen Komponente des Optikmoduls 2 in Grad Celsius ausgegeben werden kann. Die gemessenen Temperaturwerte können beispielsweise auf dem Display 24 angezeigt werden. In der Maschinensteuerung kann für jede Optikkomponente ein Schwellenwert der Temperatur hinterlegt sein. Übersteigt die gemessene Temperatur einer optischen Komponente den hinterlegten Schwellenwert, so kann ein Warnsignal erzeugt werden. Das Warnsignal kann beispielsweise als Warnung an einen Benutzer ausgegeben werden. Die Warnung kann zum Beispiel auf dem Display 24 oder mittels einer Warnleuchte optisch dargestellt werden. Zusätzlich oder alternativ kann eine Abschaltung des Lasers veranlasst werden, um eine Beschädigung der optischen Komponente zu vermeiden.

Die Schnittstellen 13b können auch dazu dienen, der Maschinensteuerung ein erfolgreiches Befestigen eines Fokussiermoduls 13 zu signalisieren. Entsprechend kann die Maschinensteuerung detektieren, dass das Fokussiermodul 13 erfolgreich gelöst und abgelegt wurde, wenn ein über die Schnittstellen 13b übertragenes Signal unterbrochen wird.

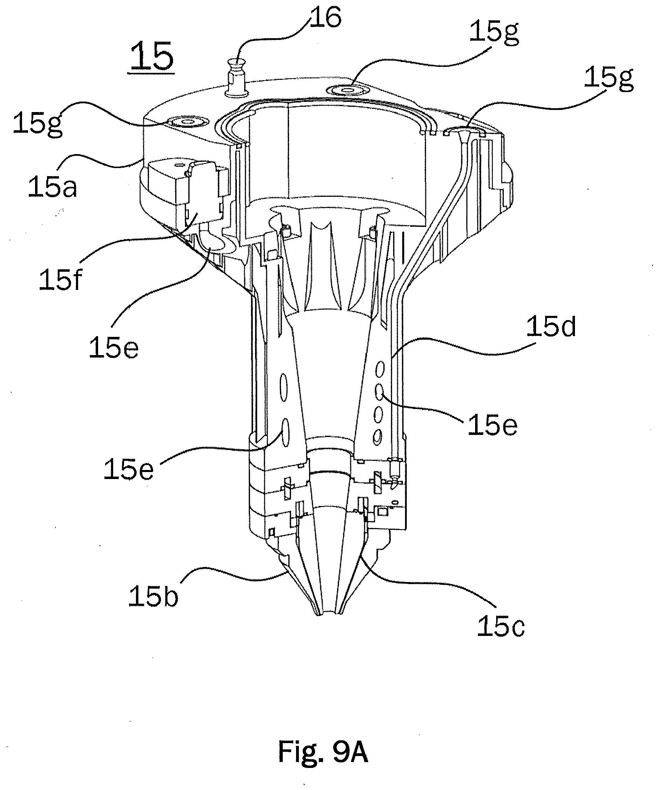

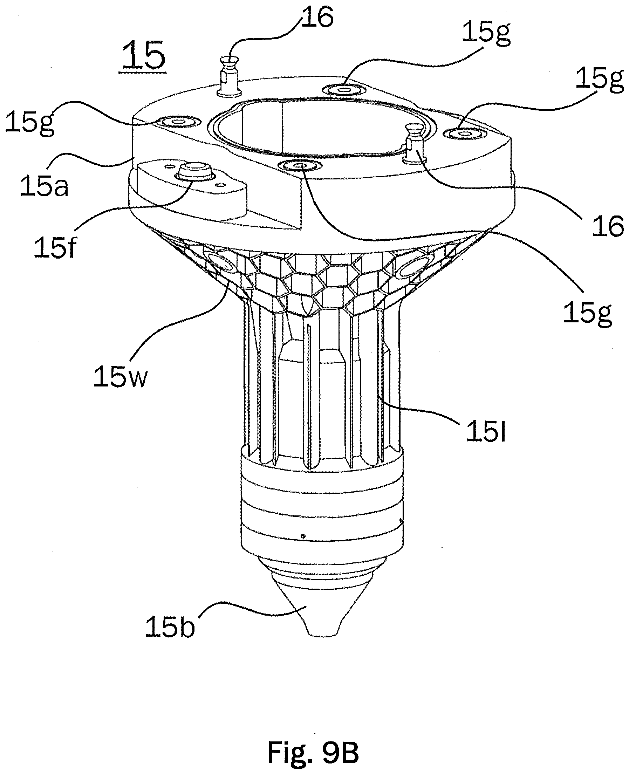

Unter das am Optikmodul 2 befestigbare Fokussiermodul 13 kann eine austauschbare Pulverdüse 15 befestigt werden. Eine beispielhafte Ausgestaltung der Pulverdüse 15 ist in Fig. 9A und 9B dargestellt. Die Pulverdüse 15 weist wie das Fokussiermodul 13 Befestigungsmittel 16 auf, die mittels entsprechender Aufnahmen 12 am Optikmodul 2 befestigt werden können. Als Befestigungsmittel 16 können beispielsweise mehrere Spannbolzen an der Pulverdüse 15 angeordnet sein. Solche Spannbolzen werden in ähnlicher Art und Weise auch zum Befestigen von Werkzeugen in herkömmlichen Werkzeugmaschinen verwendet. Die Aufnahmen 12 am Optikmodul 2 können diese Spannbolzen zum Befestigen der Pulverdüse 15 über einen hydraulischen, pneumatischen, elektromagnetischen oder über eine Feder gespannten Mechanismus einspannen, so dass die Pulverdüse 15 lösbar am Optikmodul 2 befestigt wird, wobei innerhalb einer festgelegten Toleranz immer dieselbe Position der Pulverdüse 15 erreicht werden kann.

Die in Fig. 2 und Fig. 9 dargestellte Pulverdüse 15 weist am oberen dem Optikmodul 2 zugewandtem Ende einen Flansch 15a auf, an dem die Befestigungsmittel 16, beispielsweise zwei Spannbolzen, angeordnet sind. Am Flansch 15a ist ein im Wesentlichen zylindrischer mittlerer Abschnitt der Pulverdüse 15 angeordnet. Am unteren Ende des mittleren Abschnitts ist eine im Wesentlichen kegelförmige Pulverdüsenspitze 15b angeordnet. Der mittlere Abschnitt der Pulverdüse 15 kann zusammen mit dem Flansch 15a in vorteilhafter Weise als Träger mit Zuführungen für Kühlmittel und Werkstoffpulver dienen, an dem die Pulverdüsenspitze 15b lösbar befestigt werden kann. Somit kann ein Wechsel der Pulverdüsenspitze 15b ermöglicht werden.

Am Flansch 15a der Pulverdüse 15 sind Anschlüsse 15f, 15g beziehungsweise Schnittstellen zum Zuführen eines Kühlmittels beziehungsweise eines Werkstoffpulvers angeordnet. Die Anschlüsse 15f für das Kühlmittel können beispielsweise als Schnellkupplungen ausgeführt sein, die sich beim Befestigen der Pulverdüse 15 am Optikmodul 2 automatisch mit entsprechenden Leitungen am Optikmodul 2 verbinden. Die Einlässe 15g für das Werkstoffpulver können als einfache Öffnungen ausgebildet sein, die einen Dichtungsring aufweisen. Beim Befestigen der Pulverdüse 15 am Optikmodul 2 werden die Einlässe mit den Dichtungsringen derart an entsprechende Auslässe am Optikmodul gepresst, dass eine gasdichte Verbindung entsteht.

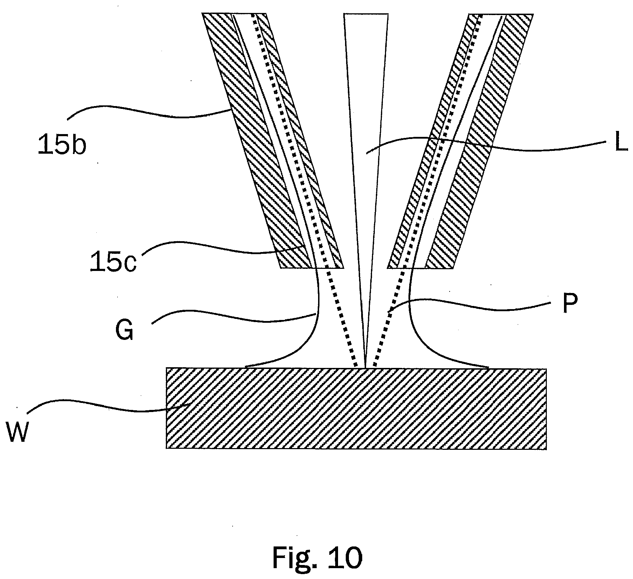

Die Einlässe 15g für Werkstoffpulver stehen jeweils mit Kanälen 15d für das Werkstoffpulver, die durch die Pulverdüse 15 zur Spitze 15b der Pulverdüse 15 verlaufen in Strömungsverbindung. In der Spitze 15b der Pulverdüse 15 ist ein Ringspalt 15c ausgebildet, dessen Spaltweite sich in Strömungsrichtung verjüngen kann, um eine Düsenwirkung zu erzielen. Der Übergang zwischen Werkstoffpulverkanälen 15d und Ringspalt 15c ist derart geformt, dass eine umfänglich gleichmäßige Verteilung des Werkstoffpulvers hergestellt wird. Es kann beispielsweise eine Vielzahl von Löchern in einem Übergang von den Werkstoffpulverkanälen 15d zum Ringspalt 15c vorgesehen sein. Die Löcher können eine gleichmäßige Verteilung des Werkstoffpulvers P im Ringspalt 15c bewirken. Der Strom des Werkstoffpulvers P kann die Form eines koaxial zum Brennpunkt des Laserstrahls ausgerichteten Kegels aufweisen, wie durch die Illustration der Fig. 10 angedeutet.

Die Pulverdüsenspitze 15b kann lösbar an der Pulverdüse 15 befestigt sein, so dass sie zum Beispiel bei Beschädigung oder Verformung durch Hitze ausgetauscht werden kann. Bei einem mehrteiligen Aufbau der Pulverdüse 15 kann die Pulverdüsenspitze 15b zudem aus einem anderen, hitzebeständigeren und/oder härteren Material als der Rest der Pulverdüse 15 gefertigt sein. Verschieden dimensionierte Pulverdüsenspitzen 15b können zum Beispiel für verschiedene Laserstrahldurchmesser verwendet werden. Ferner können unterschiedlich dimensionierte Ringspalte 15c mit verschiedenen Öffnungsweiten in austauschbaren Pulverdüsenspitzen 15b ausgebildet sein. Entsprechend können auch verschiede Pulverdüsen 15 mit unterschiedlich dimensionierten Pulverdüsenspitzen 15b in der Maschine 1 vorgehalten werden, so dass bei Bedarf die gesamte Pulverdüse 15 ausgetauscht werden kann. Der Durchmesser der unteren dem Werkstück zugewandten Öffnung der Pulverdüsenspitze 15b kann beispielsweise 1 mm, 2 mm, 3 mm, 4 mm oder 5 bis 8 mm betragen. Der Austausch der Pulverdüsenspitzen 15b erfolgt vorzugsweise manuell, während der Wechsel der gesamten Pulverdüse 15 wie weiter unten beschrieben vollautomatisch erfolgen kann.

Die Pulverdüse 15 weist mindestens zwei Kupplungen 15f für Kühlmittel auf, die vorzugsweise als Schnellkupplungen ausgeführt sind. Eine Kupplung 15f dient als Anschluss für den Vorlauf des Kühlmittels vom Optikmodul 2, die andere Kupplung 15f dient als Anschluss für den Rücklauf des Kühlmittels zum Optikmodul 2. Die Anschlüsse 15f für Kühlmittel stehen in Strömungsverbindung mit Kühlmittelkanälen 15e in der Pulverdüse 15, die in der teilgeschnittenen Ansicht der Fig. 9A illustriert sind. Die Kühlmittelkanäle 15e können beispielsweise ringförmig, spiralförmig oder schraubenförmig um die Laserstrahlöffnung angeordnet sein, um eine gleichmäßige Kühlung der Pulverdüse 15 zu gewährleisten.

Im Inneren des Flansches 15a ist eine im Wesentlichen zylindrische Aussparung für das Fokussiermodul 13 ausgeformt. Wenn das Fokussiermodul 13 und die Pulverdüse 15 am Optikmodul 2 befestigt sind, befindet sich das untere Ende des Fokussiermoduls 13 innerhalb der Aussparung in der Pulverdüse 15. Dabei sind das Fokussiermodul 13 und die Pulverdüse 15 koaxial zueinander und zum Laserstrahl am Optikmodul 2 angeordnet.

Die Pulverdüse 15 weist aufgrund der Vielzahl von Kanälen für Kühlmittel 15e und Kanälen für Werkstoffpulver 15d, sowie mit ihrer sich in axialer Richtung zum Laserbrennpunkt verjüngenden axialen Öffnung eine sehr komplexe Form auf. Solch eine komplexe Form kann beispielsweise durch ein Laserauftragsschweißverfahren in einer erfindungsgemäßen Maschine 1 hergestellt werden. Um den Herstellungsprozess der Pulverdüse 15 durch Laserauftragsschweißen in möglichst wenig Zeit und unter möglichst hoher Einsparung von Material durchführen zu können, kann beispielsweise der im Wesentlichen zylindrische mittige Abschnitt der Pulverdüse 15 mit möglichst dünner Wandstärke aufgebaut werden. Um die mechanische Festigkeit der Pulverdüse 15 zu erhöhen, kann die Wand durch Lamellen 151 verstärkt sein. In ähnlicher Weise kann der Übergang zwischen Flansch 15a und mittlerem Abschnitt der Pulverdüse 15 materialsparend gefertigt werden, indem zum Beispiel eine wie in Fig. 9B dargestellte Wabenstruktur 15w verwendet wird, die bei niedrigem Materialverbrauch eine hohe mechanische Festigkeit bietet.

Der Flansch 15a und der mittlere Abschnitt der Pulverdüse 15 können beispielsweise aus Aluminium oder aus Stahl gefertigt sein. Der Durchmesser des Flansches 15a kann ungefähr 150 mm bis 170 mm, vorzugsweise 160 mm betragen. Die gesamte Länge der Pulverdüse 15 kann ungefähr 125 mm bis 145 mm, vorzugsweise 135 mm betragen. Bei Verwendung von Fokussieroptiken 14 mit kürzeren Brennweiten können auch entsprechend kürzere Pulverdüsen mit weniger als 125 mm, beispielsweise 100 mm bis 90 mm Länge verwendet werden. Werden Fokussieroptiken 14 mit höheren Brennweiten verwendet, können auch entsprechend längere Pulverdüsen mit mehr als 145 mm, beispielsweise 150 mm bis 200 mm oder sogar 300 mm Länge verwendet werden. Der Durchmesser des mittleren Abschnitts der Pulverdüse kann ungefähr 60 mm bis 70 mm, vorzugsweise 65 bis 67 mm betragen. Vorzugsweise kann die Pulverdüse 15 auch noch kompakter gestaltet sein, um die Gefahr von Kollisionen mit dem Werkstück 30 zu verringern.

Das Austauschen der Pulverdüse 15 kann beispielsweise wie im Folgenden beschrieben erfolgen. Die Trennwand zwischen der Prozesskammer 22 und der seitlich davon angeordneten Werkzeugkammer wird aufgeschoben. Mittels der Stellachse 25b wird der untere Teil des Werkzeugwechslers 25 mit den Pulverdüsen 15 in die Prozesskammer 22 gefahren. Die Stellachsen 18 bewegen das Optikmodul 2 an die Position, an der sich Werkzeugwechsler 25 mit der Vielzahl von Pulverdüsen 15 befindet. Zum Ablegen einer am Optikmodul 2 befestigten Pulverdüse 15 muss anders als in Fig. 7 und Fig. 8 dargestellt eine Ablageposition des Werkzeugwechslers 25 frei sein. Durch Öffnen der Aufnahmen 12 am Optikmodul 2 werden die Befestigungsmittel 16 der Pulverdüse 15 freigegeben, so dass die Pulverdüse 15 vom Optikmodul 2 gelöst wird und an einer freien Ablageposition des Werkzeugwechslers 25 abgelegt werden kann.

Anschließend wird das Optikmodul 2 zu einer anderen Position des Werkzeugwechslers 25 verfahren, an der sich eine weitere Pulverdüse 15, die eine in axialer Richtung größere oder kleinere Abmessung aufweist, befindet. Das Optikmodul 2 wird dann mittels der Stellachsen 18 bewegt, so dass die Befestigungsmittel 16 der weiteren Pulverdüse 15 in die Aufnahmen 12 am Optikmodul 2 eingreifen. Durch Schließen der Aufnahmen 12 kann die Pulverdüse 15 am Optikmodul 2 befestigt und vom Werkzeugwechsler 25 herausgenommen werden.

Das automatische Wechseln der Pulverdüse 15 kann insbesondere dann erfolgen, wenn durch einen Wechsel der Fokussieroptik 14 die Brennweite des Laserstrahls verändert wird. Da die Pulverdüse 15 das Werkstoffpulver an den Ort des Brennpunkts des Laserstrahls leiten soll, muss die axiale Länge der Pulverdüse 15 entsprechend der Brennweite des Laserstrahls gewählt werden.

Wie in Tabelle 1 aufgelistet kann die Brennweite der Fokussieroptik 14 beispielsweise 200 mm oder 300 mm betragen. Entsprechend können im Werkzeugwechsler 25 der Maschine 1 entsprechende Pulverdüsen 15 vorgehalten werden, die Werkstoffpulver an einen beispielsweise 200 mm oder 300 mm von der Fokussieroptik 14 entfernten Brennpunkt leiten.

Über die Pulverdüse 15 kann ein Werkstoffpulver am Arbeitspunkt der Maschine 1, also in unmittelbarer Nähe des Brennpunkts des Laserstrahls, bereitgestellt werden. Hierzu weist die Pulverdüse 15 einen Kanal oder mehrere Kanäle auf, über die das Werkstoffpulver geleitet wird. Beim Befestigen der Pulverdüse 15 am Optikmodul 2 wird eine Verbindung der Kanäle für das Werkstoffpulver mit entsprechenden Leitungen im Optikmodul 2 hergestellt. Zum Verbinden der Kanäle und der Leitungen weisen die Pulverdüse 15 beziehungsweise das Optikmodul 2 jeweils geeignete Schnittstellen auf. Ferner weist die Pulverdüse 15 einen Kühlkanal oder mehrere Kühlkanäle auf, in denen ein fluides Kühlmittel, insbesondere Wasser, zum Kühlen der Pulverdüse 15 zirkulieren kann. Das Optikmodul 2 weist entsprechende Leitungen zum Zuführen und zum Abführen des Kühlmittels sowie Schnittstellen zum Verbinden der Leitungen mit den Kühlkanälen der Pulverdüse 15 auf.

Ferner kann die Pulverdüse 15 ein Schutzgas an den Arbeitspunkt der Maschine 1 leiten, so dass beim Schmelzen des Werkstoffpulvers im Brennpunkt des Laserstrahls unerwünschte Reaktionen weitestgehend unterdrückt werden können. Das Schutzgas dient insbesondere dazu, Sauerstoff aus der Luft zu verdrängen. Als Schutzgas können insbesondere inerte Gase wie beispielsweise Argon verwendet werden. Zum Zuführen des Schutzgases weist das Optikmodul 2 entsprechende Leitungen auf. Das Schutzgas kann auch zusammen mit dem Werkstoffpulver als Trägergas zugeführt werden. Somit dient das Schutzgas einerseits zum Verhindern einer Reaktion mit Luftsauerstoff und andererseits zum Fördern des Werkstoffpulvers.

Beim automatischen Austauschen der Pulverdüse 15 werden die Kühlleitungen des Optikmoduls 2 mit den Kühlkanälen der Pulverdüse 15 automatisch über die entsprechenden Schnittstellen verbunden beziehungsweise getrennt. Entsprechend werden auch die Leitungen für Werkstoffpulver im Optikmodul 2 mit den Werkstoffpulverkanälen in der Pulverdüse 15 automatisch über die entsprechenden Schnittstellen verbunden beziehungsweise getrennt. Die entsprechenden Schnittstellen für die Leitungen und Kanäle können hierzu lösbar ausführt sein und zum Beispiel jeweils über eine Hydraulik oder Pneumatik angesteuert werden.

Ein automatischer Wechsel des Fokussiermoduls 13 kann in ähnlicher Weise erfolgen wie der automatische Wechsel der Pulverdüse 15. Hierbei wird mittels der Stellachse 25a auch der obere Teil des Werkzeugwechslers 25 mit den Fokussiermodulen 13 in die Prozesskammer 22 gefahren. Zum Wechseln des Fokussiermoduls 13 muss jedoch zunächst eine am Optikmodul 2 befestigte Pulverdüse 15 gelöst werden. Dies erfolgt wie oben beschrieben, indem die Pulverdüse 15 an einer freien Ablageposition des Werkzeugwechslers 25 abgelegt wird. Die Stellachsen 18 bewegen dann das Optikmodul 2 an eine Position, an der sich der Werkzeugwechsler 25 mit der Vielzahl von Fokussiermodulen 13 befindet. Das am Optikmodul 2 befestigte Fokussiermodul 13 kann durch Öffnen der Aufnahmen 11 am Optikmodul 2 freigegeben werden, so dass das Fokussiermodul 13 vom Optikmodul 2 gelöst und an einer freien Ablageposition des Werkzeugwechslers 25 abgelegt werden kann. Im Folgenden kann ein anderes Fokussiermodul 13 am Optikmodul 2 befestigt werden. Hierzu wird das Optikmodul 2 derart verfahren, so dass die Befestigungsmittel 16 des Fokussiermoduls 13 in die Aufnahmen 11 am Optikmodul 2 eingreifen. Die Aufnahmen 11 am Optikmodul 2 können nun die Befestigungsmittel 16 zum Beispiel über einen hydraulischen, pneumatischen oder über eine Feder gespannten Mechanismus einspannen, um das Fokussiermodul 13 am Optikmodul 2 zu befestigen. Anschließend kann der Werkzeugwechsler 25 zurück in die abtrennbare Werkzeugkammer verschoben und die Bearbeitung des Werkstücks gestartet beziehungsweise fortgesetzt werden.

Die benötigten Verfahrwege der Stellachsen 18, 25a, 25b können in einem Speicher der Maschinensteuerung hinterlegt sein, so dass das Wechseln des Fokussiermoduls 13 beziehungsweise der Pulverdüse 15 vollautomatisch ausgeführt werden kann. Der Wechsel des Fokussiermoduls 13 beziehungsweise der Pulverdüse 15 kann somit auch in einen Bearbeitungsprozess integriert werden. Abhängig von der gewünschten Größe der zu fertigenden Strukturen des Werkstücks 30 beziehungsweise des Formkörpers 30 wird ein geeigneter Durchmesser des Laserstrahls im Brennpunkt gewählt. Je kleiner der Durchmesser des Laserstrahls am Brennpunkt ist, desto kleinere Strukturen können gefertigt werden. Den Durchmesser des Laserstrahls bestimmt wie in Tabelle 1 gezeigt die Brennweite der Fokussieroptik 14 sowie der Kollimationsoptik 3. Für jeden Bearbeitungsvorgang kann somit eine geeignete Kombination aus Kollimationsoptik 4 und Fokussieroptik 14 gewählt werden. In Abhängigkeit der gewählten Kollimationsoptik 4 und Fokussieroptik 14 wird wiederum eine geeignete Pulverdüse 15 gewählt und am Optikmodul 2 befestigt. Einerseits muss die Öffnung der Pulverdüsenspitze 15b groß genug sein, so dass der Laserstrahl L ungehindert passieren kann. Andererseits soll die Öffnung der Pulverdüsenspitze 15b klein genug sein, um einen günstigen und gleichmäßigen Fluss des Werkstoffpulvers P durch den Ringspalt 15c zum Brennpunkt des Laserstrahls L zu bewirken. Entsprechend der gewählten Strukturgröße wird dementsprechend eine geeignete Kollimationsoptik 4 am Kollimationsoptikwechsler 3 eingestellt sowie ein geeignetes Fokussiermodul 13 und eine entsprechende Pulverdüse 15 am Optikmodul 2 befestigt.

Der erste Umlenkspiegel 6 weist Mittel zum Kühlen und Überwachen der Temperatur des Spiegels 6 auf. Der zweite Umlenkspiegel 7 ist ein dichroitischer Spiegel, der ebenfalls Mittel zum Kühlen und Überwachen der Temperatur des Spiegels 7 aufweist. Für die Wellenlänge des Laserstrahls, die beispielsweise im infraroten Spektralbereich liegt, ist der dichroitische Spiegel 7 reflektierend. Für sichtbares Licht hingegen kann der dichroitische Spiegel durchlässig sein. Hinter dem dichroitischen Spiegel 7 kann eine Kamera 9 zum Überwachen des Fertigungsprozesses angeordnet sein. Die Kamera 9 ist mit Blickrichtung entlang des Laserstrahls durch den dichroitischen Spiegel und durch die Fokussieroptik 14 auf den Brennpunkt des Laserstrahls angeordnet. Somit kann mit der Kamera 9 der Arbeitspunkt auf dem Werkstück beziehungsweise dem zu fertigenden Formkörper überwacht werden.

Das Optikmodul 2 weist Schnittstellen zum Empfangen von Steuersignalen von einer Maschinensteuerung auf. Die Steuersignale können beispielsweise bewirken, dass der Kollimationsoptikwechsler 3 einen Kollimationsoptikwechsel ausführt. Über die Schnittstellen können ferner die gemessenen Temperaturen der Kollimationsoptiken 4, der Umlenkspiegel 6, 7 oder der anderen optischen Komponenten an die Maschinensteuerung übertragen werden.

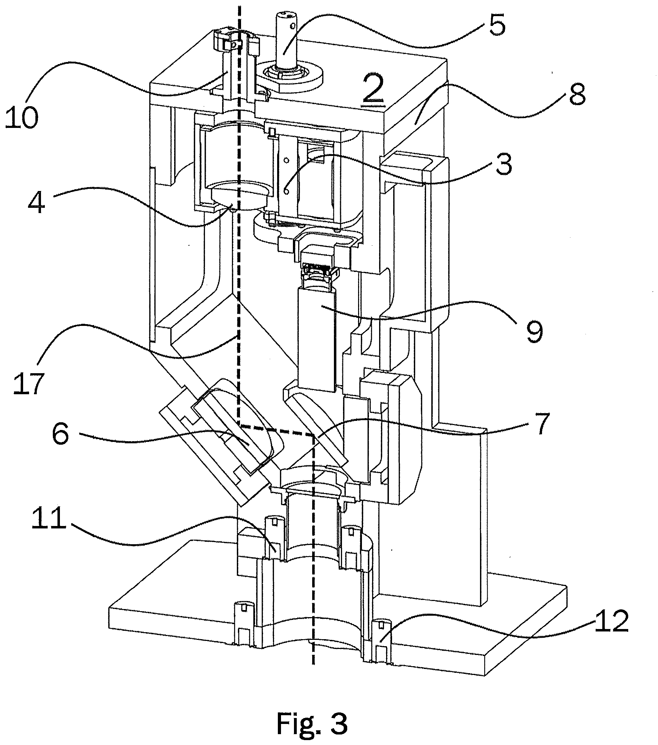

Fig. 3 zeigt eine weitere Schnittansicht des erfindungsgemäßen Optikmoduls 2 gemäß dem Ausführungsbeispiel. Der Schnitt der dargestellten Ansicht verläuft durch dieselbe Ebene wie in Fig. 2, die Blickrichtung ist jedoch von der gegenüberliegenden Seite auf das Optikmodul 2 gerichtet. Ein Strahlengang 17 des Laserstrahls ist als gestrichelte Linie eingezeichnet. Bei der in Fig. 3 gezeigten Ansicht ist sowohl eine Drehachse 5 des Kollimationsoptikwechslers 3 als auch der Faserkoppler 10 zu sehen.

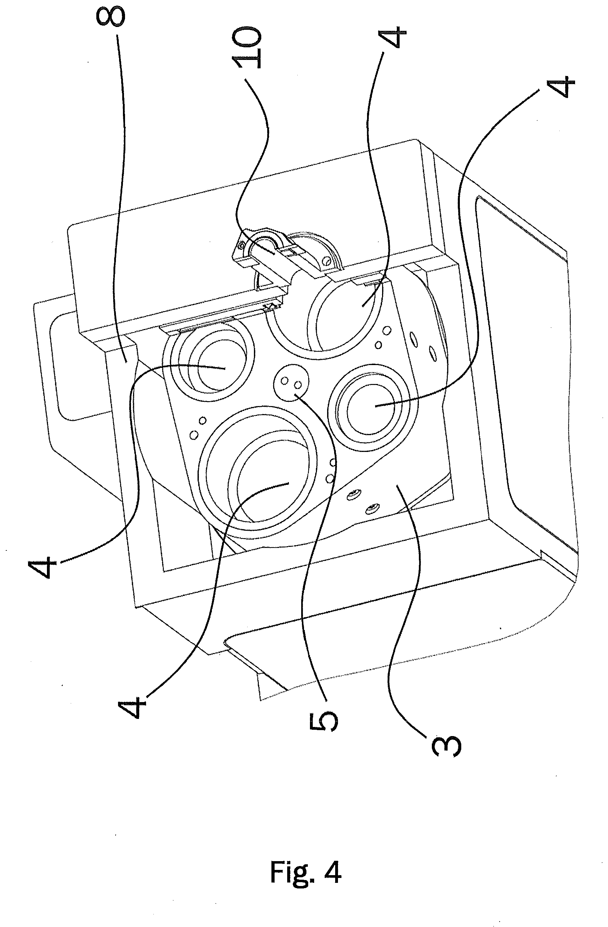

Weitere Details des erfindungsgemäßen Kollimationsoptikwechslers 3 werden anhand der in den Figuren 4 bis 6 gezeigten Schnittansichten beschrieben. Fig. 4 zeigt einen Viertelschnitt in perspektivischer Ansicht eines oberen Bereichs des Optikmoduls 2. Innerhalb des Gehäuses 8 ist der Kollimationsoptikwechsler 3 mit vier Kollimationsoptiken 4 dargestellt. Der Kollimationsoptikwechsler 3 des gezeigten Ausführungsbeispiels ist als Revolver ausgebildet, der um eine senkrechte Drehachse 5 drehbar gelagert ist. Ein nicht dargestellter Stellantrieb ist mit der Drehachse 5 wirkverbunden, so dass der Kollimationsoptikwechsler 3 durch ein Ansteuern des Stellantriebs um die Drehachse 5 gedreht werden kann, so dass ein Wechsel der Kollimationsoptiken 4 erreicht werden kann. Die Drehachse 5 ist zentral im Querschnitt dargestellt. Die Kollimationsoptik 4, die unterhalb des Faserkopplers 10 angeordnet ist, befindet sich im Strahlengang des Lasers. Der Innenraum des Gehäuses 8 des Optikmoduls 2 ist derart ausgebildet, dass sich der Kollimationsoptikwechsler 3 darin drehen kann.

Als Stellantrieb zum Drehen des Kollimationsoptikwechslers 3 um die Drehachse 5 kann ein Elektromotor, insbesondere ein Servomotor oder ein Schrittmotor verwendet werden. Die korrekte Einstellung des Kollimationsoptikwechslers 3 kann insbesondere von der im Optikmodul 2 angeordneten Kamera 9 überwacht werden, indem beispielsweise der Ort des Brennpunkts des Laserstrahls beobachtet wird. Der Laserstrahl soll die Kollimationsoptik 4 sowie die übrigen optischen Komponenten im Strahlengang möglichst zentral treffen.

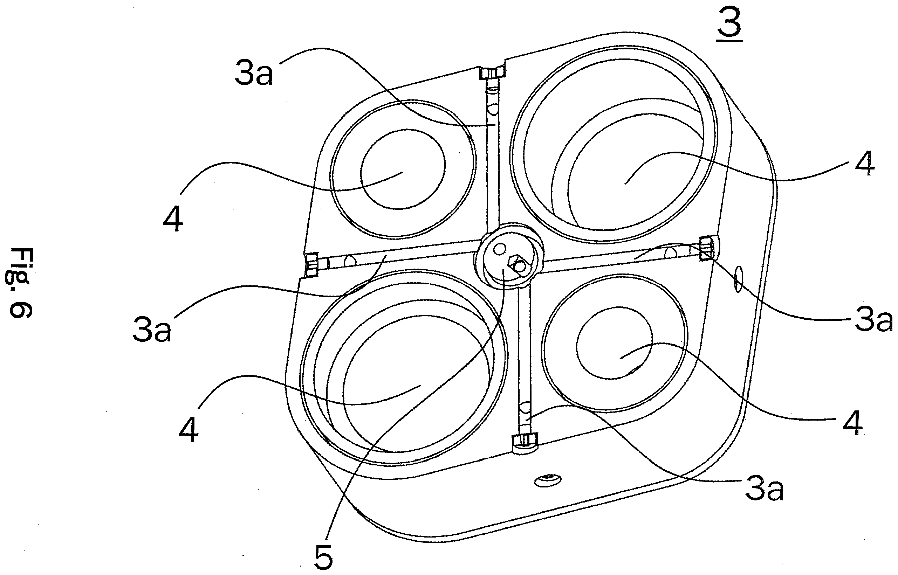

Wie in der Querschnittansicht der Fig. 6 dargestellt ist, weist der Kollimationsoptikwechsler 3 des Ausführungsbeispiels eine abgerundete Rautenform auf, die sich unter anderem aus den Linsendurchmessern der verwendeten Kollimationsoptiken 4 ergibt. In Fig. 6 ist zudem dargestellt, dass die Kollimationsoptiken 4 entsprechend ihrer Brennweite in unterschiedlichen Positionen entlang der Z-Achse, die parallel zur Drehachse 5 verläuft, angeordnet sind. Die axiale Position der Kollimationsoptiken 4 kann einstellbar sein. Somit kann die Linsenposition vor dem Einbau des Kollimationsoptikwechslers 3 in das Optikmodul 2 vorjustiert werden, so dass der Laserstrahl von jeder eingebauten Kollimationsoptik 4 korrekt kollimiert wird.

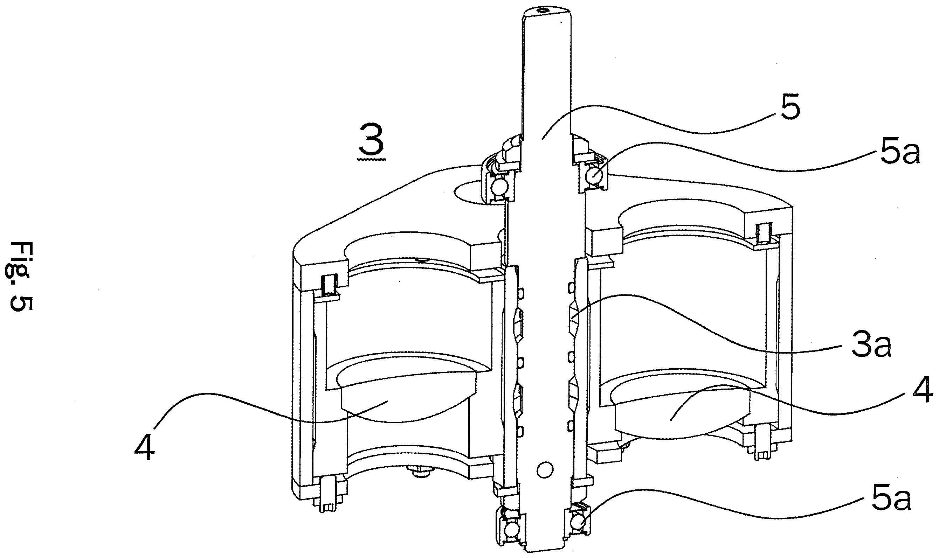

Fig. 5 zeigt einen Längsschnitt durch die Drehachse 5 des Kollimationsoptikwechslers 3. In dieser Schnittansicht sind oben und unten Lager 5a dargestellt, mittels derer die Drehachse 5 drehbar gelagert ist. Ein Flansch an einem oberen Bereich der Drehachse 5 dient zum lösbaren Befestigen der Drehachse 5 am Gehäuse 8 des Optikmoduls 2. Das untere Lager 5a ist lösbar an einem parallel zum Deckel im Gehäuse 8 angeordneten Trägerelement befestigt. Durch diesen Aufbau kann bei Bedarf ein einfacher Austausch des Kollimationsoptikwechslers 3 vorgenommen werden.

Die Kollimationsoptiken 4 sind jeweils lösbar im Kollimationsoptikwechsler 3 befestigt, so dass bei Bedarf einzelne Kollimationsoptiken 4 einfach und schnell austauscht werden können. Ferner ist über jeder Kollimationsoptik 4 jeweils ein Schutzglas angeordnet, das die Kollimationsoptik 4 vor Verschmutzung und mechanischer Einwirkung schützen kann. Somit kann durch Vorsehen von einem Schutzglas verhindert werden, dass deutlich teurere Linsen beschädigt oder verschmutzt werden, und somit ausgetauscht werden müssen. Die Schutzgläser sind ebenfalls lösbar im Kollimationsoptikwechsler 3 befestigt, so dass einzelne Schutzgläser bei Bedarf einfach und schnell austauscht werden können. Die Schutzgläser können eine Antireflexionsbeschichtung aufweisen, um störende Reflexionen von Laserlicht zurück in den Laser zu vermeiden.

Der Kollimationsoptikwechsler 3 gemäß dem in den Figuren 4 bis 6 gezeigten Ausführungsbeispiel weist vier Positionen zum lösbaren Befestigen von Kollimationsoptiken 4 auf. Diese vier Positionen sind als zylindrische Öffnungen in einem massiven Gehäuse ausgebildet, das vorzugsweise aus einem Metall, wie zum Beispiel einer Aluminium- oder Stahllegierung, oder aus einem keramischen Material gefertigt ist. Die Kollimationsoptiken 4 können ebenfalls in zylindrischen Fassungen vormontiert sein, so dass die Kollimationsoptiken 4 mit ihren Fassungen auf einfache Weise in die zylindrischen Öffnungen eingeführt und darin befestigt werden können. Abweichend von dem dargestellten Ausführungsbeispiel kann der Kollimationsoptikwechsler 3 auch mehr als vier Kollimationsoptiken 4 aufweisen. Denkbar sind beispielsweise Ausführungen mit zwei, drei, fünf, sechs, sieben oder mehr Kollimationsoptiken 4.

Der Kollimationsoptikwechsler 3 weist erfindungsgemäß Mittel zum Kühlen der Kollimationsoptiken 4 auf. Wie in Fig. 6 dargestellt weist der Kollimationsoptikwechsler 3 ein massives Gehäuse auf. Das Gehäuse kann beispielsweise aus einem einzigen Stück Metall gefräst sein. Das Kühlen der Kollimationsoptiken 4 kann beispielsweise durch Kühlen des Gehäuses des Kollimationsoptikwechslers 3 erfolgen. Hierzu weist das Gehäuse des Kollimationsoptikwechslers 3 eine Vielzahl von Kühlkanälen 3a auf, die von einem geeigneten fluiden Kühlmittel durchströmt werden. Durch das Kühlen des Kollimationsoptikwechslers 3 kann eine durch Temperaturschwankungen verursachte Beschädigung der Kollimationsoptiken 4 verhindert werden. Ferner kann durch das Kühlen ein thermischer Linseneffekt verringert werden.

In den Figuren 5 und 6 sind mehrere Kühlkanäle 3a im Kollimationsoptikwechsler 3 dargestellt. Zwei axiale Kühlkanäle verlaufen in axialer Richtung durch die Drehachse 5 des Kollimationsoptikwechslers 3. Einer dieser beiden axialen Kühlkanäle dient als Vorlauf zum Zuführen des Kühlmittels, der andere dient als Rücklauf zum Abführen des Kühlmittels, so dass das Kühlmittel in einem Kreislauf durch den Kollimationsoptikwechsler 3a zirkulieren kann. In der Schnittansicht der Fig. 6 sind vier radiale Kühlkanäle 3a des Kollimationsoptikwechslers 3 dargestellt. Die radialen Kühlkanäle 3a verlaufen von den axialen Kühlkanälen in der Drehachse 5 ausgehend radial nach außen durch den Kollimationsoptikwechsler 3. In einer zweiten zur Schnittebene parallelen Ebene verlaufen weitere radiale Kühlkanäle 3a durch den Kollimationsoptikwechsler 3. Über senkrecht zur Schnittebene durch das Gehäuse des Kollimationsoptikwechslers 3 verlaufende Kühlkanäle sind die radialen Kühlkanäle 3a der beiden Ebenen miteinander in Strömungsverbindung, um den Kühlmittelkreislauf zu ermöglichen. Das Kühlmittel kann somit den Kollimationsoptikwechsler 3 kühlen. Insbesondere wird das Gehäuse des Kollimationsoptikwechslers 3 gekühlt. Die Kollimationsoptiken 4 sind am Gehäuse des Kollimationsoptikwechslers 3 befestigt. Somit kann ein Wärmeübertrag zwischen Kollimationsoptiken 4 und Gehäuse des Kollimationsoptikwechslers 3 erfolgen, so dass ein Kühlen des Gehäuses über die Kühlkanäle 3a ein Kühlen der Kollimationsoptiken 4 bewirkt. Das Kühlmittel kann dem Optikmodul 2 über Kühlmittelleitungen zugeführt werden. Die Kühlmittelleitungen können über geeignete Anschlüsse lösbar mit Kühlmittelkanälen im Optikmodul 2 beziehungsweise in oder an den optischen Komponenten verbunden werden. Das Wirkprinzip des Laserauftragsschweißens wird anhand der Fig. 10 illustriert. Fig. 10 zeigt die Spitze 30 einer Pulverdüse 15 in der Nähe eines zu bearbeitenden Werkstücks W. Ein fokussierter Laserstrahl L verläuft koaxial zur Pulverdüse 15 und ist auf einen Arbeitspunkt auf dem Werkstück W fokussiert. Das Werkstoffpulver P wird koaxial zum Laserstrahl L durch die Pulverdüse 15 zum Brennpunkt des Laserstrahls L am Werkstück W geleitet. Ein Schutz- beziehungsweise Trägergas G strömt ebenfalls durch die Pulverdüse 15 und transportiert dabei das Werkstoffpulver P. Das Schutzgas G, beispielsweise Argon, dient außerdem dazu, unerwünschte Reaktionen des erhitzten Werkstoffpulvers P oder des Werkstücks W mit Luftsauerstoff zu unterbinden.

Die in der vorstehenden Beschreibung, den Ansprüchen und den Zeichnungen offenbarten Merkmale können sowohl einzeln als auch in beliebiger Kombination für die Verwirklichung der Erfindung in ihren verschiedenen Ausgestaltungen von Bedeutung sein.

### Bezugszeichenliste

- 1: Laser-Werkzeugmaschine
- 2: Optikmodul
- 3: Kollimationsoptikwechsler
- 3a: Kühlkanal
- 4: Kollimationsoptik
- 5: Drehachse
- 5a: Lager
- 6: erster Umlenkspiegel
- 7: zweiter Umlenkspiegel (dichroitischer Spiegel)
- 8: Gehäuse
- 9: Kamera
- 10: Faserkoppler
- 11: Schnittstelle für Fokussieroptik
- 12: Schnittstelle für Pulverdüse
- 13: Fokussiermodul
- 13a: Thermoelement
- 13b: Schnittstelle des Thermoelements
- 14: Fokussieroptik
- 14a: Schutzglas
- 15: Pulverdüse
- 15a: Pulverdüsenflansch
- 15b: Pulverdüsenspitze
- 15c: Ringspalt
- 15d: Werkstoffpulverkanal
- 15e: Kühlkanal
- 15f: Kühlmittelkupplung
- 15g: Werkstoffpulvereinlass
- 151: Lamellen
- 15w: Wabenstruktur
- 16: Spannbolzen
- 17: Strahlengang des Lasers
- 18: Stellachsen des Werkzeugs
- 19: Stellachsen des Werkstücktisches
- 20: Werkstücktisch
- 21: Maschinenrahmen
- 22: Prozesskammer
- 23: Prozessraumtür
- 24: Display
- 25: Werkzeugwechsler
- 25a: Stellachse des Fokussieroptikwechslers
- 25b: Stellachse des Pulverdüsenwechslers
- 30: Werkstück
- L: Laserstrahl
- W: Werkstück
- P: Werkstückpulver
- G: Schutzgas und/oder Trägergas

## Patentansprüche

1. Optikmodul (2) für eine Maschine (1) zum Bearbeiten von Werkstücken und/oder zum Herstellen von Formkörpern durch ortsselektives Verfestigen von Werkstoffpulver zu zusammenhängenden Bereichen mittels eines Laserstrahls, umfassend:
ein Gehäuse (8) mit Mitteln zum lösbaren Befestigen des Optikmoduls (2) an der Maschine (1) und
einen lösbar im Gehäuse (8) angeordneten Kollimationsoptikwechsler (3) mit mindestens zwei in einen Strahlengang des Laserstrahls bewegbaren Kollimationsoptiken (4) zum Kollimieren des Laserstrahls,
wobei der Kollimationsoptikwechsler (3) als Revolver ausgebildet ist und über eine senkrechte Drehachse (5) drehbar im Gehäuse (8) gelagert ist, und
wobei der Kollimationsoptikwechsler (3) umfasst:
ein Gehäuse;
einen Mechanismus zum automatischen Wechseln der Kollimationsoptiken (4);
eine Vielzahl von Kühlkanälen (3a) im Gehäuse des Kollimationsoptikwechslers (3), die zum Kühlen der Kollimationsoptiken (4) von einem fluiden Kühlmittel durchströmt werden; und
Mittel zum Messen der Temperatur der Kollimationsoptiken (4),
wobei ein erster axialer Kühlkanal als Vorlauf für das fluide Kühlmittel und ein zweiter axialer Kühlkanal als Rücklauf für das fluide Kühlmittel durch die Drehachse (5) verlaufen,
wobei die axialen Kühlkanäle mit radial in einer ersten Ebene nach außen durch das Gehäuse des Kollimationsoptikwechslers (3) verlaufenden Kühlkanälen (3b) verbunden sind,
wobei weitere radiale Kühlkanäle in einer zweiten, zur ersten Ebene parallelen Ebene durch den Kollimationsoptikwechslers (3) verlaufen,
und wobei über senkrecht zur ersten und zweiten Ebene durch das Gehäuse des Kollimationsoptikwechslers (3) verlaufende Kühlkanäle die radialen Kühlkanäle (3a) der beiden Ebenen miteinander in Strömungsverbindung stehen, um den Kühlmittelkreislauf zu ermöglichen.

2. Optikmodul (2) nach Anspruch 1, wobei das Optikmodul (2) Mittel zum Anschließen von Zuleitungen für ein Sperrgas aufweist.

3. Optikmodul (2) nach mindestens einem der vorhergehenden Ansprüche, wobei das Optikmodul (2) Mittel (11) zum Befestigen eines automatisch austauschbaren Fokussierlinsenmoduls (13) aufweist.

4. Optikmodul (2) nach mindestens einem der vorhergehenden Ansprüche, wobei das Optikmodul (2) Mittel (12) zum Befestigen einer automatisch austauschbaren Pulverdüse (15) aufweist.

5. Optikmodul (2) nach mindestens einem der vorhergehenden Ansprüche, wobei das Optikmodul (2) Mittel (10) zum Anschließen einer optischen Faser zum Bereitstellen eines Laserstrahls aufweist.

6. Optikmodul (2) nach mindestens einem der vorhergehenden Ansprüche, wobei das Optikmodul (2) eine Kamera (9) zum Überwachen eines Bearbeitungsprozesses aufweist.

7. Maschine (1) zum Bearbeiten von Werkstücken und/oder zum Herstellen von Formkörpern durch ortsselektives Verfestigen von Werkstoffpulver zu zusammenhängenden Bereichen mittels eines Laserstrahls, **dadurch gekennzeichnet, dass** die Maschine ein Optikmodul (2) nach mindestens einem der Ansprüche 1 bis 6 aufweist.

## Claims

1. An optical module (2) for a machine (1) for machining workpieces and/or for producing molded bodies by location-selective solidification of material powder to form connected regions by means of a laser beam, comprising:
a housing (8) having means for releasably attaching said optical module (2) to said machine (1), and
a collimation optics changer (3) which is arranged detachably in said housing (8) and includes at least two collimating optics (4) for collimating said laser beam,
wherein said collimation optics changer (3) is configured as a turret and is mounted rotatably in said housing (8) via an axis of rotation (5), and
wherein said collimating optics changer (3) comprises:
a case;
a mechanism for automatically changing the collimating optics (4);
a plurality of cooling channels (3a) in the case of said collimation optics changer (3), through which channels a fluid coolant flows to cool the collimation optics (4); and
means for measuring the temperature of the collimation optics (4),
wherein a first axial cooling channel as a feed for the fluid coolant and a second axial cooling channel as a return for the fluid coolant extend through the axis of rotation (5),
wherein the axial cooling channels are connected to cooling channels (3b) extending radially in a first plane outwards through the case of said collimation optics changer (3),
wherein further radial cooling channels extend in a second plane parallel to the first plane through said collimation optics changer (3),
and wherein the radial cooling channels (3a) of the two planes are in flow communication with one another via cooling channels extending perpendicularly to the first and second planes through the case of said collimating optics changer (3) in order to provide the coolant circuit.

2. The optical module (2) according to claim 1, wherein said optical module (2) comprises means for connecting supply lines for a sealing gas.

3. The optical module (2) according to at least one of the preceding claims, wherein said optical module (2) comprises means (11) for attaching an automatically exchangeable focusing lens module (13).

4. The optical module (2) according to at least one of the preceding claims, wherein said optical module (2) comprises means (12) for attaching an automatically exchangeable powder nozzle (15).

5. The optical module (2) according to at least one of the preceding claims, wherein said optical module (2) comprises means (10) for connecting an optical fiber for providing a laser beam.

6. The optical module (2) according to at least one of the preceding claims, wherein said optical module (2) comprises a camera (9) for monitoring a machining process.

7. A machine (1) for machining workpieces and/or or for producing molded bodies by location-selective solidification of material powder to form connected regions by means of a laser beam, **characterized in that** said machine comprises an optical module (2) according to at least one of claims 1 to 6.

## Revendications

1. Module optique (2) pour une machine (1) pour l'usinage de pièces et/ou pour la fabrication de corps moulés par solidification localement sélective d'un matériau pulvérulent en zones contigües au moyen d'un faisceau laser, comprenant :
un boîtier (8) avec des moyens pour la fixation détachable du module optique (2) sur la machine (1) et
un changeur d'optique de collimation (3) disposé de manière détachable dans le boîtier (8) avec au moins deux optiques de collimation (4) mobiles dans un chemin optique du faisceau laser pour la collimation du faisceau laser,
dans lequel le changeur d'optique de collimation (3) est réalisé sous la forme d'une tourelle et est monté dans le boîtier (8) de manière rotative par l'intermédiaire d'un axe de rotation (5) vertical, et
dans lequel le changeur d'optique de collimation (3) comprend :
un boîtier ;
un mécanisme pour le changement automatique des optiques de collimation (4) ;
une pluralité de canaux de refroidissement (3a) dans le boîtier du changeur d'optique de collimation (3), qui sont traversés par un réfrigérant fluide pour refroidir les optiques de collimation (4) ; et
des moyens pour mesurer la température des optiques de collimation (4),
dans lequel un premier canal de refroidissement axial en tant que canalisation aller pour le réfrigérant fluide et un deuxième canal de refroidissement axial en tant que canalisation retour pour le réfrigérant fluide s'étendent à travers l'axe de rotation (5),
dans lequel les canaux de refroidissement axiaux sont reliés à des canaux de refroidissement (3b) s'étendant radialement dans un premier plan vers l'extérieur à travers le boîtier du changeur d'optique de collimation (3),
dans lequel d'autres canaux de refroidissement radiaux s'étendent dans un deuxième plan parallèle au premier plan à travers le changeur d'optique de collimation (3),
et dans lequel les canaux de refroidissement (3a) radiaux des deux plans sont en liaison fluidique l'un avec l'autre par l'intermédiaire de canaux de refroidissement s'étendant perpendiculairement au premier et deuxième plan à travers le boîtier du changeur d'optique de collimation (3), afin de permettre la circulation de réfrigérant.

2. Module optique (2) selon la revendication 1, dans lequel le module optique (2) présente des moyens pour le raccordement de conduites d'alimentation pour un gaz de barrage.

3. Module optique (2) selon au moins l'une des revendications précédentes, dans lequel le module optique (2) présente des moyens (11) pour la fixation d'un module de lentille de focalisation (13) pouvant être remplacé de manière automatique.

4. Module optique (2) selon au moins l'une des revendications précédentes, dans lequel le module optique (2) présente des moyens (12) pour la fixation d'une buse de poudre (15) pouvant être remplacée de manière automatique.

5. Module optique (2) selon au moins l'une des revendications précédentes, dans lequel le module optique (2) présente des moyens (10) pour le raccordement d'une fibre optique pour la fourniture d'un faisceau laser.

6. Module optique (2) selon au moins l'une des revendications précédentes, dans lequel le module optique (2) présente une caméra (9) pour la surveillance d'un processus d'usinage.

7. Machine (1) pour l'usinage de pièces et/ou pour la fabrication de corps moulés par solidification localement sélective d'un matériau pulvérulent en zones contigües au moyen d'un faisceau laser, **caractérisée en ce que** la machine présente un module optique (2) selon au moins l'une des revendications 1 à 6.
